# EUROPEAN PATENT SPECIFICATION

(11) **EP 4 433 205 B1**
(45) Date of publication and mention of the grant of the patent: **15.04.2026**
(21) Application number: 22822294.9
(22) Date of filing: 16.11.2022
(51) Int. Cl.: B01J 20/30, B01J 20/32, B01J 20/18, B01D 15/02, B01J 20/20, B01J 20/22, B01J 20/26, B01J 20/28

(54) **A PROCESS OF MAKING AN ADSORBENT BODY**
HERSTELLUNGSVERFAHREN EINES ADSORPTIONSKÖRPERS
PROCÉDÉ DE FABRICATION D'UN CORPS ADSORBANT

(30) Priority: 18.11.2021 EP 21209144; 18.11.2021 GB 202116675
(43) Date of publication of application: 25.09.2024
(73) Proprietor: Cambridge Enterprise Limited, Cambridge, Cambridgeshire CB2 1TN (GB)
(72) Inventor: BABU, Robin, Cambridge Cambridgeshire CB3 0GT (GB); CAMUR, Ceren, Cambridge Cambridgeshire CB3 0GT (GB); MADDEN, David, Cambridge Cambridgeshire CB3 0GT (GB); FAIREN-JIMENEZ, David, Cambridge Cambridgeshire CB3 0GT (GB); MARSDEN, Andrew, Cambridge Cambridgeshire CB3 0GT (GB); SPENCER, Graham, Cambridge Cambridgeshire CB3 0GT (GB); CARRINGTON, Mark, Cambridge Cambridgeshire CB3 0GT (GB)
(74) Representative: Patent Boutique LLP
(86) International application number: PCT/EP2022/082166
(87) International publication number: WO 2023/088982

(56) References cited:
- CN-A- 110 115 979
- CN-A- 110 559 999
- US-A- 4 144 373
- US-A1- 2018 296 967
- US-B2- 10 525 400
- GöKPINAR SERKAN ET AL: "Air-Con Metal–Organic Frameworks in Binder Composites for Water Adsorption Heat Transformation Systems", INDUSTRIAL & ENGINEERING CHEMISTRY RESEARCH, vol. 58, no. 47, 27 November 2019 (2019-11-27), pages 21493 - 21503, XP055820444, ISSN: 0888-5885, Retrieved from the Internet <URL:https://pubs.acs.org/doi/pdf/10.1021/acs.iecr.9b04394> DOI: 10.1021/acs.iecr.9b04394

## Description

### Field of the invention

The present invention relates to a process of making an adsorbent body, an adsorbent body(ies), and uses for said adsorbent body(ies). The adsorbent body produced is robust, resistant to attrition, and is high performing. The adsorbent body is suitable for use in gas storage systems, and especially gas storage systems where the adsorbent body is subjected to movement and vibration during use, such as in vehicular fuel tanks. The adsorbent body typically has a desirable porosity profile with high levels of micro and meso-porosity and a relatively low level of macro-porosity, providing a high density adsorbent body with a high surface area.

### Background of the invention

Virtually all adsorbent materials are synthesised or formed as fine powders and are not self-supporting. To be useful in industrial processes they typically need to be formed into larger bodies to avoid problems such as compaction and channelling, which reduce fluid flow and performance. These larger bodies need to be mechanically robust and attrition resistant to be industrially useful.

US 2018/0296967 A1 discloses structured adsorbents for gas separation. Serkan Gökpinar et al. in Ind. Eng. Chem. Res., 2019, 58, 21493-21503 discloses metal-organic frameworks in binder composites.

Many industrial processes exist to form these fine powders into larger bodies, such as tablets or extrudates, typically by the application of high pressure or use of a binder material, or both. However, these processes very often reduce the sorbent properties of the adsorbent material. The application of high pressures, e.g., as often used in tabletting processes, can destroy the internal pores of the adsorbent material. This is especially relevant to more sensitive materials such as metal-organic frameworks (MOFs) and covalent-organic frameworks (COFs). An example of a metal-organic framework (MOF) that is particularly susceptible to collapse of internal pores is Zr-fumarate. Another MOF that is very hard to form into tablets is Al-fumarate, believed to be due to the platelet shape of its crystals. The high pressures needed to compensate for this crystallite morphology tend to collapse the internal pores and cause a major loss of sorbent capacity. Achieving a high density adsorbent body simply by application of high pressures during processing may be counterproductive if doing so causes significant collapse of the internal pores of the adsorbent material.

An alternative to tabletting is extrusion of the porous material with a binder. However, the use of a binder brings other problems. High levels of particulate binders such as alumina reduce performance of the adsorbent body by reducing the amount of adsorbent material in the body. High levels of binders applied as solutions or liquids will very typically block the pores of the adsorbent material and reduce performance. However, the mechanical robustness of adsorbent bodies, such as their resistance to attrition and abrasion, is typically not high enough if low levels of binder are used.

The ideal adsorbent body is one that combines high sorbent properties (usually measured by BET area and N₂ sorption isotherms) and physical robustness, such as resistance to attrition. It is also industrially preferable if the adsorbent body combines high density with high surface area and good sorbent performance. High density means that a lower volume of adsorbent body is needed for a given process requirement, as compared to a low density body. This can have very significant industrial advantages such as smaller and lighter, hence cheaper, equipment. These requirements are typically mutually contradictory. High surface area adsorbent bodies are typically associated with low density.

Whether or not the internal pores of a MOF or COF in an adsorbent body have been collapsed during processing is typically indicated by the relative density of the resultant MOF or COF body.

The relative density is defined as the envelope density of the MOF or COF body divided by the crystal density of the MOF or COF. The crystal density of the MOF or COF is the theoretical density of a single MOF or COF crystal. Very many crystal densities have been calculated and are available at the Cambridge Structural Database.

Different MOFs or COFs can have different crystal densities depending on their structure. If the envelope density of an adsorbent body is greater than the crystal density (i.e., the relative density is > 1), then this is likely due to the collapse of internal pores. The greater the relative density is above 1, the more the internal pores will have been collapsed and the lower the sorption capacity. Limiting high relative density is necessary to avoid inefficient internal pore collapse. However, the relative density of an adsorbent body should typically not be much less than 1 as this would be volumetrically inefficient. Very low relative densities typically indicate excessive levels of undesirable larger macro-pores.

Throughout this application, the IUPAC definitions of micropores (diameter of < 2nm), meso-pores (diameter of 2nm - 50nm) and macropores (diameter of > 50 nm) are used.

The envelope density of a body can be measured by dividing the weight of a body (in grams) by its envelope volume (in cm³). The envelope volume is defined in ASTM D3766 as *"the ratio of the mass of a particle to the sum of the volumes of the solid in each piece and the voids within each piece, that is, within close-fitting imaginary envelopes completely surrounding each piece".* The envelope density of a body can be measured using techniques based on the Archimedes principle of volume displacement and described later.

The ideal adsorbent body may be one that simultaneously meets what can appear to be contradictory requirements. The adsorbent body should be robust and attrition resistant. It should have a high surface area to have a good sorption capability. The adsorbent body ideally needs to have a high relative and envelope density so as to minimise the volume of material required for a given process. These requirements can often seem incompatible. For example, high levels of particulate binders (such as aluminas and clays), often required for robustness, reduce sorption capacity of an adsorbent body by reducing the amount of sorbent material present in the body. High levels of binders applied as solutions or liquids can block the pores of an adsorbent material, such as a MOF, and thus reduce performance. However, the mechanical robustness of adsorbent bodies is typically not high enough if low levels of binder are used, especially for more demanding applications.

The present invention addresses, at least to an extent, these and other problems with the prior art.

### Summary of the invention

Thus, in a first aspect, the present invention provides a process of making an adsorbent body, as claimed in claim 1 wherein the process comprises the steps of:
(a) contacting adsorbent material with an initial mixture to form a solvated adsorbent mixture in a first solvent, wherein the adsorbent material is selected from metal-organic frameworks, covalent-organic frameworks, zeolites, activated carbon, organic cages, aluminium formate and any combination thereof, and wherein the initial mixture comprises polymeric organic binder and a first solvent, wherein the solvated adsorbent mixture comprises adsorbent material, polymeric organic binder and first solvent, wherein the polymeric organic binder is adsorbed onto the surface of the adsorbent material and wherein the first solvent is distributed throughout the solvated adsorbent mixture;
(b) removing at least some of the first solvent from the solvated adsorbent mixture in the first solvent to form an initial adsorbent body;
(c) contacting the initial adsorbent body with a second solvent to form a reduced-binder adsorbent body, wherein during step (c) from 20wt% to 80wt% of the polymeric organic binder (initially present in the initial adsorbent body) is removed from the initial adsorbent body and is dissolved into the second solvent, wherein the reduced-binder adsorbent body comprises adsorbent material, polymeric organic binder, second solvent and residual first solvent, wherein polymeric organic binder is adsorbed onto the surface of the adsorbent material and wherein the second solvent is distributed throughout the reduced-binder adsorbent body; and
(d) solvent-drying the reduced-binder adsorbent body to form the adsorbent body,
wherein the solubility of the polymeric organic binder in the first solvent is the same or higher than the solubility of the polymeric organic binder in the second solvent.

The invention also provides an adsorbent body(ies)according to claim 12, and use of such an adsorbent body(ies) in adsorption-based processes (e.g. gas storage, particularly carbon dioxide or hydrogen storage).

### Detailed description of the invention

### Process of making an adsorbent body

The process of making an adsorbent body comprises the steps of:
(a) contacting adsorbent material with an initial mixture to form a solvated adsorbent mixture in a first solvent, wherein the adsorbent material is selected from metal-organic frameworks, covalent-organic frameworks, zeolites, activated carbon, organic cages, and any combination thereof, and wherein the initial mixture comprises polymeric organic binder and a first solvent, wherein the solvated adsorbent mixture comprises adsorbent material, polymeric organic binder and first solvent, wherein polymeric organic binder is adsorbed onto the surface of the adsorbent material and wherein the first solvent is distributed throughout the solvated adsorbent mixture;
(b) removing at least some of the first solvent from the solvated adsorbent mixture in the first solvent to form an initial adsorbent body;
(c) contacting the initial adsorbent body with a second solvent to form a reduced-binder adsorbent body, wherein during step (c) from 20wt% to 80wt% of the polymeric organic binder initially present is removed from the initial adsorbent body and is dissolved into the second solvent, wherein the reduced-binder adsorbent body comprises adsorbent material, polymeric organic binder, second solvent and residual first solvent, wherein the polymeric organic binder is adsorbed onto the surface of the adsorbent material and wherein second solvent is distributed throughout the reduced-binder adsorbent body; and
(d) solvent-drying the reduced-binder adsorbent body to form the adsorbent body,
wherein the solubility of the polymeric organic binder in the first solvent is the same or higher than the solubility of the polymeric organic binder in the second solvent.

During the process, the adsorbent material may be contacted with the polymeric organic binder prior to being contacted with the first solvent.

It may be preferred for the adsorbent material to be selected from Al or Zr Fumarate or UTSA-16 or CPO-27 or UiO-66 or Aluminium Formate or NbOFFIVE or CALF-15 or CALF-20 or Zeolite-4A. It may be preferred for the polymeric organic binder to be selected from polyvinyl alcohol and/or polyvinyl acetate or polyimide or polyamide or polyvinyl pyrrolidone or a biopolymer-based material such as cellulose-based polymers such as hydroxyethyl cellulose or hydroxypropyl methylcellulose or methyl cellulose or gums such as xantham gum or mixtures thereof. It may be preferred for the polymeric organic binder to be more hydrophobic. It may be preferred in some embodiments if the polymeric organic binder(s) is soluble in water and aqueous mixtures of solvents or just in a non-aqueous solvent. It may be preferred in some embodiments to use binders that are more hydrophobic in nature and hence typically not highly soluble, or even insoluble, in water.

For the purpose of clarity, references to a MOF or other adsorbent material include derivatives of that material including derivatives of the ligands and changes to the metal ions used as well as combinations and mixtures thereof. For example, references to CPO-27 would include CPO-27-Ni, CPO-27-Mg and other variants.

### Step (a) forming a solvated adsorbent mixture

Step (a) contacts adsorbent material with an initial mixture to form a solvated adsorbent mixture in a first solvent.

The adsorbent material is described in more detail below.

The initial mixture comprises polymeric organic binder and a first solvent. The first solvent may comprise a single solvent or may comprise a mixture of more than one solvents.

The solvated adsorbent mixture comprises adsorbent material, polymeric organic binder and first solvent.

During step (a), polymeric organic binder is adsorbed onto the surface of the adsorbent material.

During step (a), the first solvent is distributed throughout the solvated adsorbent mixture.

During step (a), a portion of the first solvent may provide a continuous liquid medium and/or a dispersing medium. Herein, the adsorbent material with organic binder adsorbed thereon may provide the dispersed phase.

The first solvent may comprise "free solvent". For the purposes of the invention, "free solvent" is the portion of solvent (first or second) which is external to particles or bodies of adsorbent material. Free solvent is not adsorbed into or held in the internal pores of the adsorbent material. Typically, free solvent(s) can be at least partially removed by processes such as centrifugation and decanting or by filtration.

Typically, the first free solvent is first solvent that is surrounding the adsorbent material and part of the surrounding matrix and that can be at least partially separated from the adsorbent material by a physical process such as centrifugation followed by decanting or filtration.

Step (a) may comprise one or more processing steps. Suitable processing steps include: (i) a concentration step, e.g., by filtration, sedimentation and/or centrifugation, in which at least some first solvent, e.g. free solvent, is removed from a more dilute mix of the adsorbent material in the first solvent; (ii) a mixing step; (iii) an extrusion step; (iv) and any combination thereof.

During step (a) the adsorbent material may be collected as a filtrate or precipitate either before or after contact with the initial mixture. The adsorbent material may be extruded, spheronised and/or tabletted, typically the adsorbent material is extruded after being collected as a filtrate or precipitate. During step (a), it might be preferred for the adsorbent material to be extruded and then spheronised. Suitable extrusion equipment includes single or twinscrew extruders, optionally with a die-face cutter, and a spheroniser. Suitable equipment is supplied by Caleva Ltd.

During step (a) the initial mixture may be formed by adding powdered polymeric binder to a mixture of adsorbent material and first solvent.

### Step (b) forming an initial adsorbent body

Step (b) removes at least some of the first solvent from the solvated adsorbent mixture in the first solvent to form an initial adsorbent body. Typically, step (b) includes removal of first free solvent, preferably substantially all thereof. Typically, the removal of first solvent in step (b) is accompanied by a hardening of the initial adsorbent body as the first solvent, particularly first free solvent, will act as a plasticiser and lubricant, thus softening the initial adsorbent body. First solvent can also be reduced during step (b) by the addition of an adsorbent powder to the solvated adsorbent mixture. The adsorbent powder can adsorb some of the first solvent, particularly first free solvent, into its own internal pores, thus reducing the amount of first solvent that is free. This can simplify processing.

Step (b) can be selected from:
(i) a low temperature drying step wherein the drying step is carried out at a temperature of less than 50°C, for a period of time of longer than 5 hours, and at pressure of from 0.5 to 1.0 bar, and wherein the first solvent has a boiling point of 100°C or less;
(ii) a supercritical drying step;
(iii) a freeze-drying step;
(iv) drying at a temperature of from greater than 50°C to less than 200 °C, and wherein the first solvent has a boiling point of greater than 100°C; and
(v) drying at temperatures of greater than 50°C and wherein the gaseous concentration of the first solvent being removed in the head space above the solvated adsorbent mixture is maintained at between 60% and 95% of its saturation value at the given drying temperature for at least 1 hour.

Preferably, step (b) comprises a centrifugation and/or filtration step followed by a solvent-drying step. Step (b) can also comprise only a solvent-drying step.

Typically, step (b) is carried out under mild conditions. Conditions of step (b) can depend on the type of first solvent used. First solvents that have low-volatility can be dried at higher temperatures than first solvents that have high-volatility. During drying, the force of the surface tension of the drying liquid pulling on the solids it is in contact with is preferably minimized. Rapid drying is undesirable and may impact the tight, coherent packing of the adsorbent material when forming the adsorbent body. Reducing the rate of drying during step (b) is preferred.

Step (b) can use any suitable heat source, including microwave drying.

Step (b) can also include a size reduction step to reduce the size of the initial adsorbent bodies prior to step (c). Such a size reduction step, for example using a cutting mill, can produce smaller initial adsorbent bodies, such as bodies having a diameter of less than 2mm or even less than 1mm, that can accelerate subsequent steps.

### Step (c) forming a reduced-binder adsorbent body

Step (c) contacts the initial adsorbent body with a second solvent to form a reduced-binder adsorbent body and second solvent. Typically, the second solvent comprises free solvent, e.g., a second free solvent.

Herein, the second free solvent is second solvent that is surrounding the initial adsorbent bodies. Typically, dissolved polymeric organic binder material will diffuse out from the initial adsorbent bodies into the second solvent (second free solvent). It is preferable if the solubility of the polymeric organic binder is lower in the second solvent than in the first solvent.

The second free solvent typically refers to second solvent which is external to the initial adsorbent bodies and comprises part of the surrounding matrix. Typically, the second free solvent can be easily removed by a process of filtration.

During step (c), from at least 20wt% to 80wt% of the polymeric organic binder is removed from the initial adsorbent body and is dissolved into the second solvent. Typically, the amount of polymeric binder removed may be assessed using thermogravimetric analysis as described herein.

Without wishing to be bound by theory, it is believed that the removal of polymeric organic binder from the initial adsorbent body during step (c) removes the polymeric organic binder that is most accessible, which is the polymeric organic binder that is least involved in binding the adsorbent material together and instead is most likely to block the pores of the adsorbent material in the reduced-binder adsorbent body.

During step (c) the second solvent is distributed throughout the reduced-binder adsorbent body.

Preferably, during step (c) the initial adsorbent body is in contact with the second solvent for a period of time of greater than ten (10) hours, or longer than 15 hours, or longer than 20 hours, or longer than 25 hours, or longer than 30 hours, or longer than 50 hours or even longer than 96 hours.

Without wishing to be bound by theory, contacting the initial adsorbent body with a second solvent dissolves some of the polymeric organic binder from the external surface of the initial adsorbent body. The inventors believe that the polymeric organic binder that is in closest contact with the adsorbent material will be the slowest to dissolve because it is the least accessible. The polymeric organic binder that is left is believed to be the most effective at binding adsorbent material particles together. In this manner, step (c) is removing the polymeric organic binder that is most likely blocking any pores of the initial adsorbent body. Step (c) may also remove any residual reactants from the initial adsorbent body. Step (c) may happen in several steps with smaller amounts of second solvent being replaced periodically rather than a larger volume of second solvent being used in one step. This can have advantages in limiting macroporosity by controlling the rate at which polymeric binder is removed from the initial adsorbent body. For example, in Inventive Example 1, it was found to be further advantageous to replace methanol (second solvent) every 12 hours compared to adding the initial adsorbent body to 85 ml of methanol for the same total period of time.

The solubility of the polymeric organic binder in the second solvent does not need to be high during step (c). The objective of step (c) is not to remove all of the polymeric organic binder from the initial adsorbent body.

### Step (d) forming the adsorbent body

Step (d) solvent-dries the reduced-binder adsorbent body to form the adsorbent body. This can happen over one or more process steps and typically involves a higher temperature (e.g. > 100 °C) so as to remove residual solvent from within the internal pores of the adsorbent material.

### Adsorbent body

The adsorbent body comprises adsorbent material and polymeric organic binder.

Typically, the weight ratio of adsorbent material to polymeric organic binder present in the adsorbent body is from 1:1 to 25:1, or from 2:1 to 20:1, or even from 4:1 to 15:1. It may be preferred that the weight ratio of adsorbent material to polymeric organic binder present in the adsorbent body is greater than 5:1. These levels of polymeric organic binder are sufficient to give the inventive adsorbent bodies good mechanical robustness.

The adsorbent body may comprise a material selected from:
(a) nanoparticles of metals and metal salts;
(b) enzymes;
(c) magnetic materials;
(d) dyes and pigments;
(e) graphene; and
(f) any combination thereof.

Suitable nanoparticles include metal and metal oxide nanoparticles selected from Pd, Au, Ru, Rh, Pt, Fe, Sn, Zn, Ti, Pd and any combination thereof. The nanoparticles can be photoactive, such as being photo-catalytically active. Photoactive nanoparticles can include perovskites, especially halogen perovskites. Nanoparticles can be embedded in the adsorbent body where they can help bind adsorbent particles together or can be trapped within particles of adsorbent material. If any nanoparticles are present, then their level in the adsorbent body is usually less than 0.15% volume of the adsorbent body. Suitable nanoparticles typically have a weight average particle size of less than 200nm.

These additional materials are typically added prior to step (d) and are typically added during step (a). Materials such as nanoparticles are preferably incorporated into the adsorbent material particles during the synthesis of the adsorbent material.

The adsorbent bodies can be subjected to a size reduction step to reduce the size of the adsorbent bodies prior to use. Such a size reduction step, for example using a cutting mill, can produce smaller adsorbent bodies, such as bodies having a diameter of less than 2mm or even less than 1mm.

### Metal-Organic Framework (MOF) adsorbent bodies

MOF adsorbent bodies made by the above process typically have the following properties. Without wishing to be bound by theory, the partial removal of binder from the initial adsorbent body is believed to result in a preferred porosity profile with enhanced levels of micro and meso-pores and lower levels of macro-porosity. Thus, making them particularly suitable for gas storage. Other processes typically result in higher levels of macropores and consequent lower densities.

Thus in a further aspect the invention provides an adsorbent body, made according to the process(es) described herein, wherein the adsorbent material comprises a metal-organic framework (MOF) and the adsorbent body comprises:
(a) at least 50wt% metal-organic framework (MOF) particles; and
(b) from 5.0wt% to 25wt% organic polymeric binder,
wherein the adsorbent body has:
(i) an envelope density of greater than 0.3g/cm³;
(ii) a relative density of from greater than 0.3 to less than 1.2;
(iii) a BET area of greater than 100 m²/g;
(iv) a micro-porosity of greater than 40% of the total pore volume as measured by N₂ adsorption; and
(v) a macro-porosity of less than 15% as measured by mercury intrusion porosimetry.

The adsorbent body has a BET area of greater than 100 m²/g, or greater than 200 m²/g, or greater than 300 m²/g, or greater than 400 m²/g or greater than 700 m²/g. The BET area of the adsorbent body can be as high as 2000 m²/g.

The macropores of the adsorbent body comprise less than 15% of the adsorbent body. Preferably the macro-porosity is less than 12%, or less than 10% or less than 7% or even less than 5% of the envelope volume as measured by mercury intrusion porosimetry.

For the purpose of the invention, and per the IUPAC definitions, micropores have a diameter of less than 2nm, meso-pores a diameter of from 2nm to 50nm, and macropores a diameter of greater than 50 nm.

### Adsorbent material

The adsorbent material is selected from metal-organic frameworks (MOFs) or, covalent-organic frameworks (COFs), zeolites, activated carbon, organic cages, aluminium formate and any combination thereof. Preferably the adsorbent material is a metal organic framework (MOF) or a precursor thereof, or any combination thereof or a covalent organic framework (COF) or precursor thereof, or any combination thereof. More preferably, the adsorbent material is a metal organic framework (MOF). The adsorbent material can be a combination of two or more metal organic frameworks (MOFs).

The adsorbent material may be a metal-organic framework body in particulate form. When the adsorbent material is a metal-organic framework body in particulate form, then it may be preferred that the weight ratio of adsorbent material to polymeric organic binder present in the solvated adsorbent mixture is in the range of from 1:1 to 10:1.

Preferably, the adsorbent material is in particulate form. The adsorbent material can be dispersed in a gel or slurry. More preferably, the adsorbent material is in particulate form having a mean particle size of less than 900 nm. Preferably, the SAXS particle size distribution of the adsorbent particulate material is mono-modal. However, the SAXS particle size distribution of the adsorbent particulate material may be bi-modal. By mono-modal, it is typically meant that the sizes of the adsorbent material comprise one distribution having one peak. By ensuing that the adsorbent material has a mono-modal particle size distribution, the adsorbent materials are believed to be able to pack more closely together and enables the formation of an adsorbent body having a high density.

Preferably, the adsorbent material is in the form of crystallites.

Preferably, the adsorbent material has a small particle size, preferably having a weight average particle size of from 5 nm to 900nm, or from 10nm to 800nm, or from 12nm to 700nm, or from 15nm to 500nm. The method of measuring particle size is described in more detail below. The particle size of the adsorbent material is preferably measured once the material has been formed into the adsorbent body using XRD techniques as described later. However, the particle size of the adsorbent material can also be measured prior to step (a) when in the form of a slurry. Dynamic Light Scattering techniques for measuring particle size need to be used in this case.

In case of inconsistent results, XRD testing of the adsorbent body is most applicable.

The particle size control of the adsorbent material is believed to be important to ensure the formation of a high-quality coherent adsorbent body. If the particles are too large, then this can lead to the formation of an adsorbent body having a poor (low) density profile and/or a poor robustness.

Preferably, the adsorbent material is a metal-organic framework (MOF) body selected from:
(i) Zr-containing MOFs;
(ii) Zn-containing MOFs such as Zeolite Imidazolate Frameworks, Zn-containing UTSA-16, CALF-15 and CALF-20.
(iii) MOF-74, MOF-274 and derivatives thereof;
(iv) Al-based MOFs;
(v) Fe-based MOFs;
(vi) MOFs of the M(F₆₋ₓ)Lₓ family;
(vii) Cu-based MOFs;
(viii) Co-based MOFs including Co-UTSA-16;
(ix) Cr-based MOFs
(x) Nb-based MOFs;
(xi) Ni-based MOFs;
(xii) Mn-based MOFs;
(xiii) mixed metal MOFs; and
(xiv) any combination thereof.

Suitable Zr containing MOFs include UiO-66, UiO-67, UiO-68, NU-1000, PCN-222, MOF-808 and Zr-fumarate.

Suitable ZIF monoliths include ZIF-8, ZIF-67, ZIF-71 and ZIF-90.

Suitable MOF-74s derivatives include Mn, Ni, Co, Cu and Zn variants.

Suitable Al-based MOFs include Al-fumarate, MIL-53, CAU-10, MIL-160(Al) and Al-soc-MOF-1.

Suitable Cr-based MOFs include MIL-101(Cr).

Suitable MOFs of the M(F₆₋ₓ)Lₓ family include SIFSIX-3-Ni, TIFSIX-3-Ni, NbOFFIVE-1-Ni and SIFSIX-2-Cu-i.

Suitable Cu-based MOFs include HKUST-1 and ROS-17.

Suitable Co-based MOFs include Cobalt-based UTSA-16 and derivatives thereof.

Suitable Fe-based MOFs include MIL-100(Fe) and MIL-101(Fe).

Suitable adsorbent bodies comprising MOF body can include a body wherein:
(i) the MOF is selected from UiO-66 and/or derivatives thereof such as UiO-66-NH₂ and the organic polymeric binder is selected from polyvinyl alcohol (PVA), polyimide, polyamide, methyl cellulose, and any combination thereof; or
(ii) the MOF compound is selected from ZIF-8 and/or derivatives thereof, and the organic polymer binder is selected from PVA, methyl cellulose, and any combination thereof; or
(iii) the MOF is selected from Al-fumarate and/or derivatives thereof, and the organic polymer binder is selected from PVA, polyamide, and any combination thereof; or
(iv) the MOF is selected from Zr-fumarate and/or derivatives thereof, and the organic polymer binder is PVA; or
(v) the MOF is Co or Zn UTSA-16 and/or derivatives thereof, and the organic polymeric binder is selected from polyvinyl alcohol, polyimide, polyamide, methyl cellulose, and any combination thereof.

Suitable mixed metal MOFs include MOFs based on mixtures of two or more metals selected from Fe, Ti and Zn.

Suitable MOFs can comprise mixed ligand or co-crystallite MOFs wherein the MOF comprises at least two chemically distinct organic ligands bonded to the same metal ion. This feature can help adjust the chemical behaviour of the MOF.

It may be preferred that the two chemically distinct organic ligands are chemical analogues. By chemical analogue it is meant that the structural aspects of the ligand, specifically the backbone as well as the moieties that are involved in the bonding to metal ions, are the same.

An especially preferred feature is for the chemical distinct organic ligands to be chemical analogues, such that the organic ligands have the same backbone structure but differ from each other due to the functionalisation of the backbone structure. The structural similarity of how the different organic ligand anions bond to the metal ions means that variants of a specific MOF can be formed. If the organic ligands are too dissimilar then the MOF may be amorphous or full of defects.

For example, many MOFs have dicarboxylic acids as their organic ligands. Each carboxylic acid group is involved in bonding to a metal ion. The backbone structure refers to the structure between the two carboxylic acid binding groups.

The dimensions of the backbone structure determine the dimensions of the pores formed by the organic ligands connecting with the metal ions. The chemical differences come from functional pendant groups attached to the backbone structure.

Exemplary examples are shown below. In these cases, the backbone structure is (de-protonated) terephthalic acid (A).

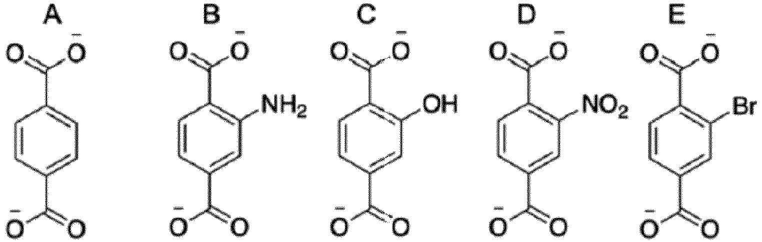

Additional exemplary examples are discussed below. Two exemplary chemical analogues are terephthalic acid (CAS 100-21-0) and 2-aminoterepthalic acid (CAS 10312-55-7). Other exemplary analogues of terephthalic acid include 2-bromoterephthalic acid (CAS 586-35-6), 2-nitroterephthalic acid (CAS 610-29-7), trimellitic acid (CAS 528-44-9), and 2-hydroxyterephthalic acid (CAS 636-94-2).

The use of such chemical analogues allows specific MOFs to be made having variable chemical properties. It may also be preferred that the two chemically distinct organic ligands comprise different backbone structures. The use of organic ligands having different backbone structures can allow for "defects" to be introduced in the monolith body, where the structure of the MOF is incomplete, or allow for more complex MOF structures. These defects can increase porosity in some situations.

Preferably, the molar ratio of a first organic ligand to a second organic ligand is greater than 1:2. More preferably, the molar ratio of the first organic ligand to the second organic ligand is greater than 1:3. Such ratios are effective at improving the physical properties and/or the chemical nature of the monoliths made from such co-crystallites.

Adsorbent bodies comprising mixtures of adsorbent materials can be prepared by mixing different adsorbent materials together prior to the addition of the polymeric organic binder.

Suitable MOF adsorbent bodies can comprise mixtures of MOF crystallites made with different ligands. For example, suitable UiO-66 based MOFs can comprise mixtures of UiO-66 BDC and UiO-66 BDC-NH₂.

Suitable COFs for use with the present invention include imine and/or hydrazone linked COFs. Accordingly, the adsorbent body may comprise an imine and/or a hydrazone linked COF.

Examples of imine-linked COFs include 3D-COOH-COF, 3D-COOH-COF, 3D-CuPor-COF, 3D-CuPor-COF-0P, 3D-OH-COF, 3D-Por-COF, 3D-Por-COF-0P, 3D-Py-COF, 3D-Py-COF-2P, 4PE-1P, 4PE-1P-oxi, 4PE-2P, 4PE-3P, 4PE-TT, BF-COF-1, BF-COF-2, BW-COF-AA, BW-COF-AB, CCOF-1, CCOF-2, CC-TAPH-COF, COF-112, COF-300, COF-320, COF-366-Co, COF-366-F4-Co, COF-366-F-Co, COF-366, COF-366-(Ome)2-Co, COF-505, COF-AA-H, COFBTA-PDA, COF-DL229, COF-LZU1, COF-SDU1, COF-TpAzo, CuP-Ph COF, CuP-TFPh COF, DAAQ-TFP COF, DABQ-TFP-COF, DAQ-TFP COF, DaTP, DhaTab, 2,3-DhaTab, 2,5-DhaTab, 2,3-DhaTph, 2,5-DhaTph, 2,3-DhaTta, 2,3-DmaTph, DMTA-TPB1/2', DMTA-TPB1/3', DMTA-TPB1/4', DMTA-TPB1/5', DMTA-TPB2, DMTA-TPB3, DMTA-TPB4, EB-COF:Br, EB-COF:Cl, EB-COF:F, EB-COF:I, FL-COF-1, HAT-COF, HAT-NTBA-COF, HBC-COF, HB-COF-AA, HB-COF-AB, HCC-H2P-COF, HO2C-H2P-COF, SIOC-COF-5, SIOC-COF-6, SIOC-COF-7, TAPB-BMTTPA-COF, TAPB-PDA COF, TAPB-TFP, TAPB-TFPB, Tb-DANT-COF, TBI-COF, TDFP-1, TEMPO-COF, TFB-COF, TfBD, TfpBDH, TH-COF-1, Thio-COF, TPA-COF-1, TPA-COF-2, TpBD, TpBD-2NO2, TP-BDDA-COF, TpBDH, TPBD-ME2, TPB-DMTP-COF, TpBD-NH2, TpBD-NHCOCH3, TpBD-NO2, TpBD-(OMe)2, TpBPy, TP-COF-BZ, TP-COF-DAB, Tp-DANT-COF, TPE-COF-I, TPE-COF-II, TPE-COF-III, TPE-COF-IV, TP-EDDA-COF, TpMA, TpPa-1, TpPa-2, TpPa-F4, TpPa-NO2, TpPa-Py, TpPa-SO3H, TpPa-SO3H-Py, Tp-Stb, TPT-COF-1, TPT-COF-2, TpTD, TpTG-Br, TpTG-Cl, TpTG-I, TpPa-1-F2, Tp-Ttba, TRIPTA, TTF-COF, TTF-Py-COF, TTI-COF, TzDa, Tp-Azo, HPB-COF, ILCOF-1-AA, ILCOF-1-AB, iPrTAPB-TFP, iPrTAPB-TFPB, LZU-301, LZU-301-sol, LZU-70, LZU-72, LZU-76, N3-COF, NN-TAPH-COF, NS-COF, NUS-10, NUS-14, NUS-15, NUS-9, HO-H2P-COF, OH-TAPH-COF, PC-COF, PI-2-COF, PI-3-COF, Por-COF, Py-1P COF, Py-1PF COF, Py-2,2'-BPyPh-COF, Py-2,3-BPyPh-COF, Py-2,3-DHPh-COF, Py-2PE COF, Py-3PEBTD COF, Py-3PE COF, Py-An COF, Py-DHPh COF, PyTTA-BFBIm-iCOF, RT-COF-1, SA-COF, Salen-COF, SB-PORPy, SIOC-COF-3-AB, and SIOC-COF-4-AB.

Examples of hydrazone-linked COFs include COF-42-bnn, COF-42-gra, COF-43-bnn, COF-43-gra, COF-ASB, COF-LZU8, CPF-1. CPF-2, and TFPT-COF.

Suitable zeolites include aluminosilicate zeolites having the chemical formula NaₙAlₙSi₉₆₋ₙO₁₉₂·16H₂O (0<n<27). Aluminosilicate zeolites having this chemical formula include the widely used catalytic zeolite known commercially as Zeolite Socony Mobil-5, ZSM-5. The or each zeolite body may have a SiO₂:Al₂O₃ ratio of from about 50:1 to about 120:1, preferably from about 80:1 to about 100:1. Commonly used aluminosilicate zeolites include Type A, Type X and Type Y zeolites.

Other zeolite types may also be suitable, for example titanium silicate (e.g. TS-1) or pure siliceous (e.g. Silicalite-1) zeolite.

### Initial mixture

The initial mixture comprises polymeric organic binder and a first solvent.

Typical weight ratios of polymeric organic binder to first solvent range from 1:50 to 1:4 or even 1:2 The initial mixtures are typically formed by dissolving or dispersing polymeric organic binder into the first solvent, often at high temperature and with agitation. If the initial mixture is too concentrated it may be hard to mix well with the adsorbent material. If it is too dilute it wastes first solvent and can limit the deposition efficiency of the polymeric organic binder onto the surface of the adsorbent material. The initial mixture can be formed prior to, or concurrently with, contact with the adsorbent material. However, it is preferred for the initial mixture to be formed prior to contact with the adsorbent material so as to maximise mix homogeneity and contact of adsorbent material particles with binder material.

### Polymeric organic binder

The solubility of the polymeric organic binder in the first solvent is the same or higher than the solubility of the polymeric organic binder in the second solvent. Preferably, the solubility of the polymeric organic binder in the first solvent is higher than the solubility of the polymeric organic binder in the second solvent.

Preferably, the polymeric organic binder is selected from polyvinyl alcohol (PVA), polyvinyl acetate, polyethyleneimine, polyvinyl pyrrolidone, polyimide (PI), polyvinyl formal, polyacrylic acid and salts thereof, polyethylene glycol, polypropylene glycol, poly(1,4-phenylene- ether-ether-sulfone) (PFEES), poly(dimethylsiloxane) (PDMS), poly(tetrahydrofuran) (PTHF), polyolefins, polyamide, chitosan, cellulose acetate, hydroxypropyl methyl cellulose (HPMC), methyl cellulose, hydroxyethyl cellulose, hydroxypropyl methylcellulose phthalate (HPMCP), and any combination thereof. A preferred binder mixture comprises PVA and a cellulose-based polymer, especially hydroxyethyl cellulose or methyl cellulose.

### Free Solvent

The term "free solvent" refers to solvent which is external to particles or bodies of adsorbent material. Free solvent is not adsorbed into the internal pores of the adsorbent material. Typically, free solvent(s) can be at least partially removed by processes such as centrifugation and decanting or by filtration.

### First solvent

The first solvent may be chemically the same as the second solvent or may be chemically different. Preferably the first solvent is chemically different from the second solvent. A preferred first solvent is water (a polar protic solvent) or dimethyl sulfoxide (DMSO; a polar aprotic solvent). Other polar, aprotic solvents are also preferred, including dimethylformamide (DMF), dimethylacetamide (DMS) and N-methyl-2-pyrolidone. Other first solvents may include alcohols, glycols, acetone and distilled paraffin oils and mixtures thereof.

### Solvated adsorbent mixture

The solvated adsorbent mixture comprises adsorbent material, polymeric organic binder and first solvent, wherein polymeric organic binder is adsorbed onto the surface of the adsorbent material and wherein the first solvent is distributed throughout the solvated adsorbent mixture. The solvated adsorbent mixture may also comprise residual reactants and solvents from any previous process steps, such as the synthesis and washing of the adsorbent material.

The solvated adsorbent mixture comprises adsorbent material, polymeric organic binder and first solvent. Typically, the solvated adsorbent material comprises adsorbent material and polymeric organic binder at a weight ratio of from 0.75:1 to 12.5:1 or from 1:1 to 9:1 or from 2:1 to 6:1.

### First free solvent

Typically, the first free solvent is first solvent that is surrounding the adsorbent material and part of the surrounding matrix. It is not first solvent that is adsorbed within the pores of the adsorbent material. Free solvent may typically be at least partially separated from the adsorbent material by a physical process such as centrifugation followed by decanting or filtration.

### Initial adsorbent body

Typically, the initial adsorbent body comprises polymeric organic binder, adsorbent material, and any residual first solvent. The initial adsorbent body may also comprise residual reactants. Typically, it may be thermodynamically more favourable for any polymers in solution to deposit on the surface of the adsorbent material, rather than remain in solution.

Typically, the initial adsorbent body has a high ratio of polymeric organic binder to adsorbent material and will typically be mechanically very robust but have poor sorption capacity due to pore blockage. The weight ratio of adsorbent material to polymeric organic binder can be in the range of from 1:1 to 12:1, for instance 10:1.

### Second solvent

The second solvent may be chemically the same as the first solvent or may be chemically different. Preferably the second solvent is chemically different from the first solvent. The second solvent can comprise mixtures of solvents, including mixtures comprising the first solvent. The second solvent can be the same as the first solvent but at a lower or different temperature so as to reduce the solubility of the polymeric binder in the solvent. The solubility of the binder in the second solvent must be lower than in the first solvent.

Preferably, the second solvent is selected from alcohols and glycols. Preferably, the second solvent has a molecular weight of less than 600 Da. More preferably, the second solvent has a molecular weight of less than 600 Da and is selected from alcohols and glycols. Particularly preferred second solvents are methanol and ethanol. Typically, up to 40% of another solvent can be added to the second solvent. For example, 90:10 mixtures of methanol and water can be used as the second solvent.

### Reduced-binder adsorbent body

The reduced-binder adsorbent body comprises adsorbent material, polymeric organic binder, second solvent and residual first solvent.

Typically, the weight ratio of polymeric organic binder to adsorbent material in the reduced-binder adsorbent body is lower than the ratio of polymeric organic binder to adsorbent material in the initial adsorbent body. Typically, it is necessary to remove a significant proportion of the polymeric organic binder, e.g., from the surfaces of the adsorbent material, and significantly increase the available surface area. Typically, removing at least 20wt% of the polymeric organic binder present, even at higher adsorbent material to binder ratios, is required to have a beneficial effect on surface area. It may be preferred to remove at least 30wt%, or at least 40wt%, or even at least 50wt% of the polymeric organic binder present. It may be preferred to remove from 20wt% to 80wt%, or from 30wt% to 80wt%, or from 40wt% to 80wt%, or from 50wt% to 80wt% of the polymeric organic binder present.

### Second free solvent

The second free solvent is second solvent that is surrounding the initial adsorbent bodies. Typically, dissolved polymeric organic binder material will diffuse out from the initial adsorbent bodies into the free second solvent. It is preferable if the solubility of the polymeric organic binder is lower in the second solvent than in the first solvent.

The second free solvent typically refers to second solvent which is external to the initial adsorbent bodies and comprises part of the surrounding matrix. Typically, the second free solvent can be easily removed by a process of filtration or by just removing the adsorbent bodies from the second solvent.

### Test Methods

### Mean particle size measurement by XRD

### nNi

The weight average particle size of adsorbent material in an adsorbent body can be measured by X-Ray diffraction (XRD). The weight average particle size of the adsorbent material making up the adsorbent body can be determined by X-ray diffraction using the Scherrer equation to calculate particle size from the full-width at half maximum (FWHM) measure of the diffraction peak. The adsorbent material particles are often quite isotropic in shape with no single preferred orientation of crystallite growth so the choice of which reflection to use is not critical but for consistency, the (0 1 0) reflection is used, and the K value is constant at 0.94. Suitable equipment includes the X'Pert Pro from PANalytical.

### Measurement of adsorbent material particle size prior to step (a)

The particle size distribution of the adsorbent particles can also be measured prior to step (a) if in a slurry or suspension by dynamic light scattering techniques (DLS). XRD however is the preferred method. Suitable equipment for DLS includes the NANO-flex II from Colloid Metrix. Dilution of the suspension is usually not required.

### Method of measuring binder solubility in a solvent

The solubility of a binder in a solvent can be determined by adding 10g of the binder in powdered form to 100g of solvent at ambient temperature and stirring for two hours. After this the mix should be filtered through filter paper, such as Whatman Grade 1 having a pore size of 11 microns, and the filtrate dried at 100°C until no further loss of weight and the dry weight then measured. If all of the binder dissolves during the test, a further 10g of binder should be added and the mixture stirred for a further two hours. If need be, this is repeated until solid binder remains at the end of the stirring period such that the measured solubility is the saturation solubility. The solubility of the binder in the solvent is the total weight of dissolved binder divided by the weight of the solvent.

### Method for measuring the BET area of an adsorbent body.

The BET surface area of an adsorbent body can be measured by use of ASTM method D3663-03 "Standard test method for surface area of catalysts and catalyst carriers". The BET surface area is determined by measuring the volume of nitrogen gas adsorbed at various low-pressure levels by the monolith sample. Pressure differentials caused by introducing the monolith surface area to a fixed volume of nitrogen in the test apparatus are measured and used to calculate BET surface area. Suitable equipment for measuring BET surface area include the 3Flex from Micromeritics Corporation, used according to the manufacturer's guidelines.

### Micro-porosity

The MOF body preferably a micro-porosity of greater than 40% and less than 75% of the total pore volume as measured by N₂ adsorption. Some mesoporosity (having larger pores than micropores but smaller than macropores) may beneficially assist the transfer of fluids throughout the MOF body.

The micro and meso-porosity profile of a body can be determined by test method ASTM D4641-17. Suitable equipment for carrying out such tests is the ASAP 2020 Plus, from Micromeritics Corporation. The test method is as follows.

The test sample (0.5g) is typically heated to 300°C under vacuum to remove adsorbed gases and vapours from the surface. The nitrogen adsorption branch of the isotherm is then determined by placing the sample under vacuum, cooling the sample to the boiling point of liquid nitrogen (~77.3 K), and then adding, in a stepwise manner, known amounts of nitrogen gas at increasing pressure P to the sample in such amounts that the form of the adsorption isotherm is adequately defined, and the saturation pressure of nitrogen is reached.

Each additional dose of nitrogen is introduced to the sample only after the preceding dose of nitrogen has reached adsorption equilibrium with the sample.

Typically, equilibrium is reached if the change in gas pressure is no greater than 0.1 torr/5 min interval. This is continued until P₀ (the gas saturation pressure) is reached.

Data is typically plotted as the amount of gas adsorbed/desorbed (and derived porosity profiles) as a function of P/P₀. The desorption isotherm is determined by desorbing nitrogen from the saturated sample in a stepwise manner with the same precautions taken to ensure desorption equilibration as those applied under adsorption conditions. Microporosity is associated with the volume of gas adsorbed at P/P₀ values of < 0.1 whereas mesoporosity is associated with the volume of gas adsorbed at P/P₀ values between 0.1 and 0.98.

### Method of measuring macroporosity by mercury porosimetry

Mercury porosity values can be measured according to ASTM D4284-12. Suitable equipment for carrying out ASTM D4284-12 include the Micromeritics AutoPore VI 9510 from Micromeritics Corp, USA. The surface tension and contact angle of mercury are taken as being 485 mN/m and 130°, respectively. In ASTM D4284-12, mercury is forced into pores under pressure. A sample size of 1 g is preferably used. The adsorbent body is fragmented and sieved between 710 microns and 250 microns, and the sieved material used.

The pressure required to force mercury into the pores of the sample is inversely proportional to the size of the pores according to the Washburn equation. It is assumed that all pores are cylindrical for the purpose of characterization. The porosimeter increases the pressure on the mercury inside the sample holder to cause mercury to intrude into increasingly small sample pores. The AutoPore VI will automatically translate the applied pressures into equivalent pore diameters using the Washburn equation and the values of contact angle and surface tension given above.

The envelope volume of the sample is determined by the volume of mercury displaced at atmospheric pressure. As the applied pressure is increased, mercury is forced into internal pores. The % macro-porosity of a sample is therefore the volume of the mercury intruded into the sample as the pressure is increased from 1.001 atm to 292 atm as a proportion of the volume displaced at atmospheric pressure.

Mercury porosimetry is not suitable for measuring micro and meso-porosity as the pressures required to force mercury into the small pores are too high to be practical.

### Method for measuring the envelope density of an adsorbent body

The adsorbent body may have an envelope density greater than 0.4 g/cm³, or greater than 0.6 g/cm³ or greater than 0.8 g/cm³, or greater than 1.0 g/cm³.

The envelope density of a body can be measured by dividing the weight of a body (in grams) by its envelope volume (in mm³). The envelope volume is defined in ASTM D3766 as *"the ratio of the mass of a particle to the sum of the volumes of the solid in each piece and the voids within each piece, that is, within close-fitting imaginary envelopes completely surrounding each piece".* The envelope density of a body can be measured using techniques based on the Archimedes principle of volume displacement. For example, the envelope density can be measured by mercury porosimetry. At atmospheric pressure, mercury does not intrude into internal pores. Therefore, the volume of mercury displaced by a body at atmospheric pressure is the envelope volume of the body. Dividing the weight of the sample by this volume gives the envelope density. The use of mercury porosimetry is described above.

An alternative, and viable, technique for larger bodies, typically those with a diameter > 2 mm, is to use accurate 3-D scanners to measure the body volume. Suitable equipment includes the Leica BLK360. Preferably, powder pycnometers, such as the GeoPyc Model 1360 from Micrometrics Instrument Corp, can also be used to measure the envelope volumes and densities of bodies. If need be, the envelope volumes measured by these techniques can be used interchangeably with the envelope volume measured by mercury porosimetry.

### Method for determining the level of binder in an adsorbent body

The level of the polymeric organic binder in an adsorbent body can be determined by thermo-gravimetric methods based on weight loss at elevated temperatures. The high temperatures used (600°C) will burn off the organic species leaving metal oxide species etc behind. The difference in % weight loss between a sample of the adsorbent material and a sample of the adsorbent material plus binder shows the level of binder. The adsorbent body is crushed and a sample of the adsorbent body material is heated up to 600 °C and the weight loss when at steady state is measured and normalised. A sample of the adsorbent material is then heated under identical conditions and the weight loss normalised. The difference between the % wt losses is the % of binder present. This method is especially suitable when the adsorbent body comprises MOF and/or zeolite.

Residual solvent levels in a sample can be determined by weight loss of the sample after heating the sample to 120°C for 12 hours under vacuum. Binder level in the sample can then be determined by thermo-gravimetric analysis as previously described.

### Assessment of Mechanical Integrity

The relative mechanical integrity of the adsorbent MOF bodies can be assessed by placing 10 g of adsorbent MOF bodies in a sealed glass jar (100 ml capacity can be suitable) and shaking vigorously by hand for 1 minute. The robustness of the adsorbent bodies can be visually assessed by the presence of dust on the inside surfaces of the glass jar. More quantitative tests, which are typically suitable for testing more stressful environments, such as vehicle storage tanks, can be done by placing identical quantities, such as 10g, of adsorbent bodies in a tumbling mixer, such as a Macsalab Mixer from Eriez and comparing the relative amounts of fine material (< 150 microns) generated by tumbling the samples for similar times and speeds, such as 200 rpm, and then sieving the material. Grinding media, such as balls, can be added to increase the stress of the test.

### Relative density

Relative density refers to the ratio of the envelope density of a crystalline adsorbent body compared to the crystal density of the adsorbent material.

The crystal density of a MOF or other crystalline material is the density of a single crystal and is calculated theoretically from the structure. Structural and other information for MOFs and other crystalline adsorbent material is available from the Cambridge Structural Database.

Relative densities of much less than 1, such as less than 0.3, mean that there is excess porosity, mostly in the form of larger (hence less useful) pores in the body. Relative densities greater than 1 imply a wasteful loss of porosity as such high values can only be achieved by destroying some of the useful pores.

Adsorbent bodies preferably have a relative density of from greater than 0.3 or from greater than 0.5 or from great than 0.7 to less than 1.2.

### Example 1 (inventive)

### Production of an adsorbent body comprising Zr-Fumarate and Polyvinyl Alcohol (PVA).

### Preparation of the initial mixture.

1.6g of PVA (Mowiol 10-98, Sigma Aldrich) was dissolved in 40ml of anhydrous 99.9% DMSO (dimethyl sulfoxide supplied by Sigma-Aldrich) by heating at 80°C for 1h.

### Preparation of the adsorbent material - Zr-fumarate MOF.

2.34g of Zr-acetylacetonate (CAS 17501-44-9 supplied by TCI) and 0.557g of fumaric acid (99%, Acros Organics) were mixed with 7.8ml of water followed by the addition of 4.2ml glacial acetic acid (99 %, Fisher Scientific). The resulting suspension was then stirred at ambient temperature (20 - 25°C) for 3 days. After 3 days, the resulting mixture was transferred into a Falcon tube and 30ml of acetone was added. The mix was then centrifuged for 25min at 5250rpm (Beckman-Coulter J-15R). The supernatant liquor was removed, and another 30ml acetone was added with manual agitation and the centrifugation step repeated and the supernatant liquor decanted. After this, the Falcon tube contained approx. 1.0g of a concentrated gel pellet of adsorbent material.

### Contacting the adsorbent material with the initial mixture.

5ml of the initial mixture prepared above at ambient temperature was added to the Falcon tube containing the adsorbent material and the Falcon tube manually agitated for five minutes to make sure everything was dispersed and mixed together. This was repeated five times and the sample was left overnight for 14 hours. The sample was then centrifuged at 5250rpm using the J-15R for 30 min and the supernatant liquor poured off. The open Falcon tube was then left to dry at 35°C for 2 weeks to give an initial adsorbent body.

The initial adsorbent body had a composition of 18.3% PVA, 73.4% Zr-fumarate and 8.3% residual DMSO.

### Forming the reduced-binder adsorbent body.

The initial adsorbent body was then immersed in 5ml of methanol. Every 12 hours the methanol was replaced with a fresh 5ml sample. This was repeated over a total of nine days to give a reduced-binder adsorbent body.

### Forming the adsorbent body.

The reduced binder adsorbent body was then removed from the methanol and dried at room temperature overnight. The solvent-dried reduced binder adsorbent body was then further dried to activate it by heating at 120°C under vacuum for 12h to give an adsorbent body comprising 91.74% Zr-fumarate and 8.26% PVA.

For clarification - the analysis above meant that the initial adsorbent body had 24.9 parts of PVA for every 100 parts of MOF. The adsorbent body (and hence the reduced-binder adsorbent body also) had 9 parts of PVA for every 100 parts of MOF. This represented the removal of 63.8% of the PVA originally present. The first solvent is DMSO and the second solvent is methanol. Solubility of PVA in methanol is lower than in DMSO.

### Example 2 (comparative)

### Production of an adsorbent body comprising Zr-fumarate.

Zr-fumarate was synthesised according to the procedure described above in *"Preparation of the adsorbent material - Zr-Fumarate MOF''.* The open Falcon tube containing the pellet of concentrated adsorbent material gel was then dried at 35°C for 2 weeks. The dried body was contacted with 5ml of methanol for 12 hours when the methanol was replaced with 5ml of fresh methanol. This was repeated every 12 hours for three days to solvent-exchange the residual DMSO. The Zr-fumarate body was then activated by being dried under vacuum for 12 hours at 120°C.

### Example 3 (comparative)

An initial adsorbent body comprising Zr-fumarate and PVA was prepared as per example 1.

This initial adsorbent body did not go through the binder-reduction step etc but was directly activated by heating at 120°C under vacuum to remove residual DMSO, retaining substantially all of the PVA in the resulting dried adsorbent body.

### Example 4 (comparative)

Zr-fumarate (the adsorbent material) and the initial mixture were prepared as per example 1.

The adsorbent material was contacted with the initial mixture in a similar manner to example 1 except that instead of adding 5 ml of initial mixture, 2 ml of initial mixture and 3 ml of DMSO were added. The initial adsorbent body was then prepared following the same procedure as per example 1 to give an initial adsorbent body comprising 7.5% PVA, 86% Zr-fumarate and 6.5% residual DMSO.

The initial adsorbent body was then activated by being dried at 120°C under vacuum for 12 hours to give an adsorbent body comprising 8% PVA and 92% Zr-fumarate.

Example 4 showed the difference between samples having similar levels of binder but where one sample (Example 1) had been prepared by the inventive process and the other (Example 4) not. Example 1was visibly more robust than Example 4.

### Test data is shown below

| **Example** | **BET surface area** | **Micropore Volume** | **Mesopore Volume** | **Envelope Density** | **Mechanical Integrity** |
|---|---|---|---|---|---|
| | m²g⁻¹ | cm³ g⁻¹ | cm³ g⁻¹ | g cm⁻³ | |
| **1.** Zr-fumarate with 8.26% PVA (inventive) | 740 | 0.29 | 0.63 | 1.0 | No visible dust generated |
| **2.** Zr-fumarate (comparative) | 796 | 0.31 | 0.76 | 0.85 | Visible dust generated |
| **3.** Zr-fumarate 20% PVA (comparative) | no significant area measurable | | | | No visible dust generated |
| **4.** Zr-fumarate 8% PVA (comparative) | 403 | | | | Some visible dust generated |

### Example 5 (inventive)

### Production of an adsorbent body comprising UiO-66 MOF and polyimide (PI) binder.

### Preparation of the initial mixture.

1.6 g of Polyimide (CAS 62929-02-6 supplied by Alfa Aesar) was dissolved in 40ml of anhydrous 99.9% DMSO (dimethyl sulfoxide supplied by Sigma-Aldrich) by heating at 80°C for 1 hr.

### Preparation of the adsorbent material - UiO-66 MOF.

Benzene-1,4-dicarboxylic acid (98%, Sigma-Aldrich, 7.25mmol), and ZrOCl₂·8H₂O (98%, Acros Organics, 5.0mmol) were dissolved completely in 30ml N,N-dimethylformamide (DMF) (99%, Alfa-Aesar), followed by the addition of 1.5ml concentrated hydrochloric acid (37 %, Honeywell Fluka) and 2.0ml (99+%, Alfa-Aesar) glacial acetic acid. The resulting solution was then sealed and heated in an isotherm oven 100°C for 2h resulting in thick white gel of UiO-66. The above synthesised gel was diluted by the addition of 50ml DMF and then centrifuged (5min, 5250rpm, Beckman-Coulter J-15R). The gel was washed further with 50ml of fresh DMF and centrifuged again under similar conditions. The supernatant liquid was then poured off. One Falcon tube contained around 0.5g of a concentrated gel pellet of adsorbent material.

### Contacting the adsorbent material with the initial mixture.

2.5ml of the initial mixture prepared above at ambient temperature was added to the Falcon tube containing the adsorbent material and the Falcon tube manually agitated for five minutes to make sure everything was dispersed and mixed together. This was repeated five times and the sample was left overnight for 14 hours. The sample was then centrifuged at 5250rpm using the J-15R for 120min and the supernatant liquor poured off. The open Falcon tube was then left to dry at 35°C for 2 weeks to give an initial adsorbent body.

The initial adsorbent body had a composition of 17.9% Polyimide, 70.6% UiO-66 and 12.5% residual DMF.

### Forming the reduced-binder adsorbent body.

The initial adsorbent body was then immersed in 5ml of methanol. Every 12 hours the methanol was replaced with a fresh 5ml sample. This was repeated over a total of two days to give a reduced-binder adsorbent body.

### Forming the adsorbent body.

This was then removed from the methanol and dried at room temperature overnight. The solvent-dried reduced binder adsorbent body was then further dried at 120°C under vacuum for 12h to give an adsorbent body comprising 76.9% UiO-66 and 13.1% Polyimide. The adsorbent body had the following properties.

For clarification - the analysis above meant that the initial adsorbent body had 25.3 parts of Polyimide for every 100 parts of MOF. The adsorbent body (and hence the reduced-binder adsorbent body also) had 17.0 parts of Polyimide for every 100 parts of MOF. This represented the removal of 32.8% of the Polyimide originally present. The solubility of polyimide in DMSO is higher than in methanol.

### Example 6 (comparative)

### Preparation of a UiO-66 adsorbent body.

UiO-66 was synthesised as in Example 5.

The concentrated gel pellet of UiO-66 in the Falcon tube was then left to dry at 35°C for 2 weeks. The dried body was then immersed in 5ml of methanol. Every 12 hours the methanol was replaced with a fresh 5ml sample. This was repeated over a total of two days to give a purified adsorbent body of UiO-66. This was then activated by heating at 120°C under vacuum for 12 hours.

### Example 7 (comparative)

### Production of an adsorbent body comprising UiO-66 MOF and Polyimide (PI) binder without the binder reduction step.

UiO-66 and the initial mixture were prepared as in Example 5.

2.5ml of the initial mixture prepared above at ambient temperature was added to the Falcon tube containing the adsorbent material and the Falcon tube manually agitated for five minutes to make sure everything was dispersed and mixed together. This was repeated five times and the sample was left overnight for 14 hours. The sample was then centrifuged at 5250rpm using the J-15R for 120min and the supernatant liquor poured off. The open Falcon tube was then left to dry at 35°C for 2 weeks to give an initial adsorbent body. This was then activated by heating at 120°C under vacuum for 12 hours.

### Test Data is Shown Below

| **Material** | **BET surface area** | **Micropore Volume** | **Mesopore Volume** | **Envelope Density** | **Mechanical Integrity** |
|---|---|---|---|---|---|
| | m²g⁻¹ | cm³ g⁻¹ | cm³ g⁻¹ | g cm⁻³ | |
| 5. UiO-66 with 13.13% PI (inventive) | 1026 | 0.401 | 0.509 | 0.69 | No visible dust generated |
| 6. UiO-66 (comparative) | 1101 | 0.424 | 0.756 | | Visible dust generated |
| 7. UiO-66 20.2% PI - (comparative) | no significant area measurable | Not measurable | Not measurable | | No visible dust generated |

### Example 8 (inventive)

### Production of an adsorbent body comprising Al-fumarate MOF and polyvinyl alcohol organic polymer binder.

### Preparation of the initial mixture.

1.8g of PVA (Mowiol 10-98, Sigma Aldrich) was dissolved in 50ml of anhydrous 99.9% DMSO (dimethyl sulfoxide supplied by Sigma-Aldrich) by heating at 80°C for 1 hr.

### Preparation of the adsorbent material - Al-Fumarate MOF.

Fumaric acid (1.40 g, lab grade supplied by Fisher Scientific) and aluminium acetylacetonate (1.55g, CAS 13963-57-0 supplied by Merck) were mixed together in a 25ml vial with stirring with 12ml of sodium hydroxide solution (8.3mM) at 90°C for 20h. Then, the resulted material was diluted by the addition of 50ml of ethanol and centrifuged (4750rpm, 15min, Beckman-Coulter J-15R). The supernatant was decanted. This centrifuging step was repeated 4 times with the addition of fresh ethanol to wash the resulted Al-fumarate. After this, the Falcon tube contained approx. 0.65g of a concentrated gel pellet of adsorbent material.

### Contacting the adsorbent material with the initial mixture.

3.0 ml of the initial mixture prepared above at ambient temperature was added to a Falcon tube containing 0.65g of the adsorbent material mix and the Falcon tube manually agitated for five minutes to make sure everything was dispersed and mixed together. The Falcon tube was left for one hour and formed a gel. This gel was dried at 60°C for 4 days to form the initial adsorbent body.

The initial adsorbent body had a composition of 12.3% polyvinyl alcohol, 82.1% Al-fumarate and 5.6% residual DMSO.

### Forming the reduced-binder adsorbent body.

The initial adsorbent body was then immersed in 5ml of methanol. Every 12 hours the methanol was replaced with a fresh 5ml sample. This was repeated over a total of five days to give a reduced-binder adsorbent body.

### Forming the adsorbent body.

This was then removed from the methanol and dried at room temperature overnight. The solvent-dried reduced binder adsorbent body was then further dried at 130°C under vacuum for 12h to give an adsorbent body comprising 92.4.2% Al-fumarate and 7.6% PVA.

### Example 9 (inventive)

### Production of an adsorbent body comprising Al-fumarate MOF and methyl cellulose organic polymer binder.

### Preparation of the initial mixture.

20.0g of Methyl Cellulose (MO262 Sigma Aldrich) was dissolved in 80g of deionised (DI) water by adding the methyl cellulose to heated water and then letting the mixture cool down under continuous stirring. In this example, the first solvent was water.

### Preparation of the adsorbent material - Al-Fumarate MOF.

Fumaric acid (1.40 g, lab grade supplied by Fisher Scientific) and aluminium acetylacetonate (1.55g, CAS 13963-57-0 supplied by Merck) were mixed together in a 25ml vial with stirring with 2ml of sodium hydroxide solution (0.05M) and 10 ml of DI water at 90°C for 20h. Then, the resulted material was diluted by the addition of 30ml of methanol and centrifuged (4750rpm, 15min, Beckman-Coulter J-15R). The supernatant was decanted. This centrifuging step was repeated twice with the addition of fresh methanol to wash the resulted Al-fumarate. After this, the Falcon tube contained approx. 1g of a concentrated gel pellet of adsorbent material.

### Contacting the adsorbent material with the initial mixture.

2 ml of the initial mixture prepared above at ambient temperature was added to a Falcon tube containing 1g of the adsorbent material mix and the Falcon tube manually agitated for five minutes to make sure everything was dispersed and mixed together. The mix was then centrifuged and supernatant liquid removed. The Falcon tube was then left to dry at 60°C for 4 days to form the initial adsorbent body.

The initial adsorbent body had a composition of 64% aluminium fumarate, 27% methyl cellulose, with the balance residual solvents.

### Forming the reduced-binder adsorbent body.

The initial adsorbent body was then immersed in 5ml of a 95:5 ethanol:water mixture (second solvent). Every 12 hours the second solvent was replaced with a fresh 5ml sample. This was repeated over a total of five days to give a reduced-binder adsorbent body.

### Forming the adsorbent body.

This was then removed from the second solvent and dried at room temperature overnight. The solvent-dried reduced binder adsorbent body was then further dried at 130°C under vacuum for 12h to give an adsorbent body comprising 77% Al-fumarate and 23% methyl cellulose.

### Example 10 (comparative)

### Preparation of an Al-fumarate adsorbent body.

Al-fumarate was synthesised and concentrated into a gel pellet as per example 8.

This gel was dried at 60°C for 4 days. The dried body was then immersed in 5ml of methanol. Every 12 hours the methanol was replaced with a fresh 5ml sample. This was repeated over a total of five days to give a purified adsorbent body. This was then removed from the methanol and dried at room temperature overnight. The solvent-dried reduced binder adsorbent body was then further dried at 130°C under vacuum for 12h.

### Example 11 (comparative)

### Production of an adsorbent body comprising Al-fumarate MOF and PVA binder without the binder reduction step.

An initial adsorbent body was prepared as per example 8.

The initial adsorbent body was then activated by heating at 130°C under vacuum for 12h. This gave a body with 13% PVA and 87% Al-fumarate. **Test data is Shown Below**

| **Material** | **BET surface area** | **Mechanical Integrity** |
|---|---|---|
| | m²g⁻¹ | |
| 8. Al-fumarate with 7.6% PVA (inventive) | 1026 | Minor visible dust generated |
| 10. Al-fumarate body (comparative) | 1101 | Crumbled to fragments |
| 11. Al-fumarate with 13% PVA (comparative) | 696 | Minor visible dust generated |

### Example 12 (inventive)

### Production of an inventive adsorbent body comprising Zr-Fumarate and Polyvinyl Alcohol (PVA).

### Preparation of the initial mixture.

1.6g of PVA (Mowiol 10-98, Sigma Aldrich) is dissolved in 40ml of anhydrous 99.9% DMSO (dimethyl sulfoxide supplied by Sigma-Aldrich) by heating at 80°C for 1h.

### Preparation of the adsorbent material - Zr-fumarate MOF.

2.34g of Zr-acetylacetonate (CAS 17501-44-9 supplied by TCI) and 0.557g of fumaric acid (99%, Acros Organics) is mixed with 7.8ml of water followed by the addition of 4.2ml glacial acetic acid (99 %, Fisher Scientific). The resulting suspension is then stirred at ambient temperature (20 - 25°C) for 3 days. After 3 days, the resulting mixture is transferred into a Falcon tube and 30ml of acetone was added. The mix is then centrifuged for 25min at 5250rpm (Beckman-Coulter J-15R). The supernatant liquor is removed, and another 30ml acetone is added with manual agitation and the centrifugation step repeated and the supernatant liquor decanted. After this, the Falcon tube contains approx. 1.0g of a concentrated gel pellet of adsorbent MOF material.

### Contacting the adsorbent MOF material with the initial mixture.

5ml of the initial mixture prepared above at ambient temperature is added to the Falcon tube containing the adsorbent MOF material and the Falcon tube manually agitated for five minutes to make sure everything is dispersed and mixed together. This is repeated five times and the sample is left overnight for 14 hours. The sample is then centrifuged at 5250rpm using the J-15R for 30 min and the supernatant liquor poured off. The open Falcon tube is then left to dry at 35°C for 2 weeks to give an initial adsorbent MOF body.

The initial adsorbent MOF body has a composition of 18.3% PVA, 73.4% Zr-fumarate and 8.3% residual DMSO.

### Forming the reduced-binder adsorbent MOF body.

The initial adsorbent MOF body is then immersed in 5ml of methanol. Every 12 hours the methanol is replaced with a fresh 5ml sample. This is repeated over a total of nine days to give a reduced-binder adsorbent MOF body.

### Forming the adsorbent MOF body.

The reduced binder adsorbent MOF body is then removed from the methanol and dried at room temperature overnight. The solvent-dried reduced binder adsorbent MOF body is then further dried to activate it by heating at 120°C under vacuum for 12h to give an adsorbent MOF body comprising 91.3% Zr-fumarate and 8.7% PVA.

### Example 13 (comparative)

### Production of an adsorbent MOF body comprising Zr-fumarate.

Zr-fumarate is synthesised according to the procedure described above in *"Preparation of the adsorbent material - Zr-Fumarate MOF" (Example 12).* The open Falcon tube containing the pellet of concentrated adsorbent MOF material gel is then dried at 35°C for 2 weeks. The dried body is contacted with 5ml of methanol for 12 hours when the methanol is replaced with 5ml of fresh methanol. This is repeated every 12 hours for three days to solvent-exchange the residual DMSO. The Zr-fumarate body is then activated by being dried under vacuum for 12 hours at 120°C.

### Example 14 (comparative)

An initial adsorbent MOF body comprising Zr-fumarate and PVA is prepared as per Example 12 except that 7ml of the initial mixture is added rather than 5ml.

This initial adsorbent MOF body does not go through the binder-reduction step etc but is directly activated by heating at 120°C under vacuum for 12 hours to remove residual DMSO.

### Test data is shown below

| **Example** | **BET surface area** | **Macro porosity** | **Micro porosity** | **Relative Density** | **Envelope Density** | **Mechanical Integrity - Manual shaking** |
|---|---|---|---|---|---|---|
| | m²g⁻¹ | % | % | | g cm⁻³ | |
| 12. Zr-fumarate with 8.7 % PVA (inventive) | > 600 | < 15 | > 40 | < 1.2 | > 0.7 | No visible dust generated |
| 13. Zr-fumarate (comparative) | > 600 | > 15 | > 40 | < 1.2 | > 0.7 | Visible dust generated |
| 14. Zr-fumarate 27% PVA (comparative) | < 100 | < 15 | < 40 | > 1.2 | > 0.7 | No visible dust generated |

Only the inventive example 12 provided both mechanical integrity and high sorption capacity.

### Example 15 (inventive)

### Production of an adsorbent body comprising Al-Fumarate and methyl cellulose (MC).

### Preparation of the initial mixture.

1.6g of methyl cellulose (MC), CAS 9004-67-5, viscosity 400cPs, Thermo Scientific, was dissolved in 40 ml of ambient water (first solvent) with stirring for 1 hr.

### Preparation of the adsorbent material - Al-fumarate MOF.

Fumaric acid (1.40 g, lab grade supplied by Fisher Scientific) and aluminium acetylacetonate (1.55g, CAS 13963-57-0 supplied by Merck) were mixed in a 25ml vial with stirring with 12ml of sodium hydroxide/water solution (8.3mM) at 90°C for 20h. Then, the resulted material was diluted by the addition of 50ml of ethanol and centrifuged (4750rpm, 15min, Beckman-Coulter J-15R). The supernatant was decanted. This centrifuging step was repeated 3 times with the addition of fresh methanol to wash the Al-fumarate.

### Contacting the adsorbent material with the initial mixture.

5ml of the initial mixture prepared above at ambient temperature was added to the Falcon tube containing 1 g of Al-fumarate adsorbent material and the Falcon tube manually agitated for five minutes to make **Example 15 (inventive)**

### Production of an adsorbent body comprising Al-Fumarate and methyl cellulose (MC).

### Preparation of the initial mixture.

1.6g of methyl cellulose (MC), CAS 9004-67-5, viscosity 400cPs, Thermo Scientific, was dissolved in 40 ml of ambient water (first solvent) with stirring for 1 hr.

### Preparation of the adsorbent material - Al-fumarate MOF.

Fumaric acid (1.40 g, lab grade supplied by Fisher Scientific) and aluminium acetylacetonate (1.55g, CAS 13963-57-0 supplied by Merck) were mixed in a 25ml vial with stirring with 12ml of sodium hydroxide/water solution (8.3mM) at 90°C for 20h. Then, the resulted material was diluted by the addition of 50ml of ethanol and centrifuged (4750rpm, 15min, Beckman-Coulter J-15R). The supernatant was decanted. This centrifuging step was repeated 3 times with the addition of fresh methanol to wash the Al-fumarate.

### Contacting the adsorbent material with the initial mixture.

5ml of the initial mixture prepared above at ambient temperature was added to the Falcon tube containing 1 g of Al-fumarate adsorbent material and the Falcon tube manually agitated for five minutes to make sure everything was dispersed and mixed together. This was repeated five times and the sample was left overnight for 14 hours. The sample was then centrifuged at 4750 rpm using the J-15R for 30 min and the supernatant liquor poured off. The open Falcon tube was then left to dry at 35°C for 5 days to give an initial adsorbent body.

The initial adsorbent body had a composition of 26.2% MC, 65.5% Al-fumarate and 8.3% water.

### Forming the reduced-binder adsorbent body.

The initial adsorbent body was then immersed in 5ml of methanol (second solvent). Every 12 hours the methanol was replaced with a fresh 5ml sample. This was repeated over a total of nine days to give a reduced-binder adsorbent body.

### Forming the adsorbent body.

The reduced binder adsorbent body was then removed from the methanol and dried at room temperature overnight. The solvent-dried reduced binder adsorbent body was then further dried to activate it by heating at 130°C under vacuum for 12h to give an adsorbent body comprising 78.4% Al-fumarate and 21.6% MC.

For clarification - the analysis above meant that the initial adsorbent body had 40 parts of methyl cellulose for every 100 parts of MOF. The adsorbent body (and hence the reduced-binder adsorbent body also) had 27.6 parts of methyl cellulose for every 100 parts of MOF. This represented the removal of 31% of the binder originally present.

### Example 16 (inventive)

### Production of an adsorbent body comprising UTSA-16 and polyvinyl alcohol (PVA).

### Preparation of the initial mixture.

1.6g of PVA (Mowiol 10-98, Sigma Aldrich) was dissolved in 40ml of water (first solvent) by heating at 80°C for 1h.

### Preparation of the adsorbent material - UTSA-16 MOF.

Zinc acetate dihydrate (3.1 g, CAS 5970-45-6 lab grade supplied by Thermo Scientific) and citric acid (2.7g, CAS 77-92-9 supplied by Thermo Scientific) were mixed in a 50ml vial with 26 mL deionised water. 2.3 g of potassium hydroxide (85%, CAS 1310-58-3 supplied by Thermo Scientific) is dissolved in 11.3 mL deionised water in a beaker. The KOH solution was added to the zinc solution and mixed with the stirrer. 12.2 mL ethanol was then added and the temperature of the reaction mixture raised to 85°C for 4hrs and then allowed to cool to ambient. The product was then centrifuged and washed with water three times by redispersion in 50ml water and centrifugation at 4750 rpm using a J-15R for 20 mins. After the final centrifugation, the supernatant liquid was poured off leaving a wet pellet of UTSA-16 adsorbent material.

### Contacting the adsorbent material with the initial mixture.

5ml of the initial mixture prepared above at ambient temperature was added to a Falcon tube containing 1.0 g of the wet UTSA-16 adsorbent material pellet prepared above and the Falcon tube manually agitated for five minutes to make sure everything was dispersed and mixed together. This was repeated five times and the sample was left overnight for 14 hours. The sample was then centrifuged at 4750rpm using the J-15R for 30 min and the supernatant liquor poured off. The open Falcon tube was then left to dry at 35°C for 4 days to give an initial adsorbent body.

This gave an initial adsorbent body with a water level of 12%, 70% UTSA-16 and 18% PVA.

### Forming the reduced-binder adsorbent body.

The initial adsorbent body was then immersed in 5ml of ethanol (second solvent). Every 12 hours this was replaced with a fresh 5ml sample. This was repeated over a total of nine days to give a reduced-binder adsorbent body.

### Forming the adsorbent body.

The reduced binder adsorbent body was then removed from the second solvent and dried at room temperature overnight. The solvent-dried reduced binder adsorbent body was then further dried to activate it by heating at 130°C under vacuum for 12h. This gave an adsorbent body comprising 90.1% UTSA-16 and 9.9% PVA.

For clarification - the analysis above meant that the initial adsorbent body had 25.7 parts of PVA for every 100 parts of MOF. The adsorbent body (and hence the reduced-binder adsorbent body also) had 11.0 parts of PVA for every 100 parts of MOF. This represented the removal of 57.3% of the organic binder originally present.

### Example 17 (inventive)

### Production of an adsorbent body comprising HKUST-1 and mixed PVA/methyl cellulose binder.

### Preparation of the initial mixture.

0.53g of methyl cellulose (viscosity 400cPs, Thermo Scientific), and 1.07g of PVA was dissolved in 40 ml of anhydrous 99.9% DMSO (dimethyl sulfoxide supplied by Sigma-Aldrich) by heating at 90°C for 1 hr.

### Preparation of the adsorbent material - HKUST-1 MOF.

Copper acetate monohydrate (2.4 g, CAS 6046-93-1, sigma aldrich), and 1,3,5-Benzenetricarboxylic acid (3.36g, CAS 528-44-9, Sigma Aldrich) were dissolved in water/ethanol (30%) mixture and stirred at room temperature or 50 °C for 45 minutes. After finishing the desired time, the HKUST-1 formed was centrifuged (4750rpm, 15min, Beckman-Coulter J-15R), washed with ethanol and centrifuged. The supernatant was decanted.

### Contacting the adsorbent material with the initial mixture.

5ml of the initial mixture prepared above was added to the Falcon tube containing 1.0 g of HKUST-1 adsorbent material and the Falcon tube manually agitated for five minutes to make sure everything was dispersed and mixed. This was repeated couple of times and the sample was left for few hours. The sample was then centrifuged at 4750rpm using the J-15R for 30 min and the supernatant liquor poured off. The open Falcon tube was then left to dry at 35°C for 4 days to give an initial adsorbent body.

The initial adsorbent body had a composition of 18.3% PVA/MC, 73.4% HKUST-1 and 8.3% DMSO. Note total binder levels were measured as the TGA method was unable to distinguish between PVA and methyl cellulose.

### Forming the reduced-binder adsorbent body.

The initial adsorbent body was then immersed in 5ml of a 97:3 methanol:PEG 600 mix (second solvent). Every 12 hours the solvent was replaced with a fresh 5ml sample. This was repeated over a total of nine days to give a reduced-binder adsorbent body.

### Forming the adsorbent body.

The reduced binder adsorbent body was then removed from the second solvent and dried at room temperature overnight. The solvent-dried reduced binder adsorbent body was then further dried to activate it by heating at 130°C under vacuum for 12h to give an adsorbent body comprising 92.9% HKUST-1 and 7.1% PVA/MC.

For clarification - the analysis above meant that the initial adsorbent body had 24.9 parts of PVA/MC for every 100 parts of MOF. The adsorbent body (and hence the reduced-binder adsorbent body also) had 7.6 parts of PVA for every 100 parts of MOF. This represented the removal of 69.5% of the PVA/MC binder originally present.

The adsorbent body prepared above had the following properties. Equivalent bodies prepared without the binder removal step did not have a significant BET area. HKUST-1 powder prepared according to the described synthesis and then dried at 120 °C under vacuum for 12 2 -1 hours had a BET area of 1560 m g .

| **Example** | **BET surface area** | **Micropore Volume** | **Mesopore Volume** | **Envelope Density** | **Mechanical Integrity** |
|---|---|---|---|---|---|
| | m²g⁻¹ | cm³ g⁻¹ | cm³ g⁻¹ | g cm⁻³ | |
| **17.** HKUST-1 with 7.10% PVA/MC (inventive) | 1480 | 0.56 | 0.10 | 0.99 | No visible dust generated |

## Claims

1. A process of making an adsorbent body, wherein the process comprises the steps of:
(a) contacting adsorbent material with an initial mixture to form a solvated adsorbent mixture in a first solvent, wherein the adsorbent material is selected from metal-organic frameworks, covalent-organic frameworks, zeolites, activated carbon, organic cages, and any combination thereof, and wherein the initial mixture comprises polymeric organic binder and a first solvent, wherein the solvated adsorbent mixture comprises adsorbent material, polymeric organic binder and first solvent, wherein the polymeric organic binder is adsorbed onto the surface of the adsorbent material and wherein the first solvent is distributed throughout the solvated adsorbent mixture;
(b) removing at least some of the first solvent from the solvated adsorbent mixture in the first solvent to form an initial adsorbent body;
(c) contacting the initial adsorbent body with a second solvent to form a reduced-binder adsorbent body, wherein during step (c) from at least 20wt% to 80wt% of the polymeric organic binder is removed from the initial adsorbent body, as measured by the method for determining the level of binder in an adsorbent body described herein, and is dissolved into the second solvent, wherein the reduced-binder adsorbent body comprises adsorbent material, polymeric organic binder, second solvent and residual first solvent, wherein the polymeric organic binder is adsorbed onto the surface of the adsorbent material and wherein the second solvent is distributed throughout the reduced-binder adsorbent body; and
(d) solvent-drying the reduced-binder adsorbent body to form the adsorbent body,
wherein the solubility of the polymeric organic binder in the first solvent is the same or higher than the solubility of the polymeric organic binder in the second solvent.

2. A process according to claim 1, wherein the solubility of the polymeric organic binder in the first solvent is higher than the solubility of the polymeric organic binder in the second solvent.

3. A process according to any preceding claim, wherein the adsorbent material is a metal-organic framework body in particulate form, and wherein the weight ratio of adsorbent material to polymeric organic binder present in the solvated adsorbent mixture is in the range of from 1:1 to 9:1.

4. A process according to any preceding claim, wherein the weight ratio of adsorbent material to polymeric organic binder present in the adsorbent body is greater than 3:1.

5. A process according to any preceding claim wherein step (b) comprises a solvent-drying step or a centrifugation and/or filtration step followed by a solvent-drying step, optionally wherein the solvent-drying step in step (b) is selected from:
(i) a low temperature drying step wherein the drying step is carried out at a temperature of less than 50°C, for a period of time of longer than 5 hours, and at pressure of from 0.5 to 1.0 bar, and wherein the first solvent has a boiling point of 100°C or less;
(ii) a supercritical drying step;
(iii) a freeze-drying step;
(iv) drying at a temperature of from greater than 50°C to less than 200 °C, and wherein the first solvent has a boiling point of greater than 100°C; and
(v) drying at temperatures of greater than 50°C and wherein the gaseous concentration of the first solvent being removed in the head space above the solvated adsorbent mixture is maintained at between 60% and 95% of its saturation value at the given drying temperature for at least 1 hour.

6. A process according to any preceding claim, wherein during step (c) the initial adsorbent body is in contact with the second solvent for a period of time of greater than ten hours.

7. A process according to any preceding claim, wherein the adsorbent material is a metal-organic framework (MOF) body selected from:
(i) Zr-containing MOFs;
(ii) Zn-containing MOFs such as Zeolite Imidazolate Frameworks and Zn-containing UTSA-16, CALF-15, CALF-20, ZnNi(NA);
(iii) MOF-74 and derivatives thereof;
(iv) Al-based MOFs;
(v) Fe-based MOFs;
(vi) MOFs of the M(F₆₋ₓ)Lₓ family;
(vii) Cu-based MOFs;
(viii) Co-based MOFs;
(ix) Cr-based MOFs;
(x) Nb-based MOFs such as NbOFFIVE;
(xi) Ni-based MOFs;
(xii) Mn-based MOFs;
(xiii) mixed metal MOFs; and
(xiv) any combination thereof.

8. A process according to any preceding claim, wherein the polymeric organic binder is selected from polyvinyl alcohol (PVA), polyvinyl acetate, polyethyleneimine, polyimide (PI), polyvinyl pyrrolidone, polyvinyl formal, polyacrylic acid, sodium polyacrylate, polyethylene glycol, polypropylene glycol, poly(1,4-phenylene- ether-ether-sulfone) (PFEES), poly(dimethylsiloxane) (PDMS), poly(tetrahydrofuran) (PTHF), polyolefin, polyamide, chitosan, cellulose acetate, hydroxypropyl methyl cellulose (HPMC), methyl cellulose, hydroxypropyl methylcellulose phthalate (HPMCP), and any combination thereof.

9. A process according to any preceding claim, wherein the second solvent is selected from alcohols and glycols, and wherein the second solvent has a molecular weight of less than 600Da.

10. A process according to any preceding claim wherein the adsorbent body comprises a material selected from:
(a) nanoparticles of metals and metal salts;
(b) enzymes;
(c) magnetic materials;
(d) dyes and pigments;
(e) graphene and graphene oxide; and
(f) any combination thereof.

11. A process according to any preceding claim where the adsorbent material is selected from Al or Zr fumarate and the polymeric organic binder is selected from polyvinyl alcohol, methyl cellulose or polyimide.

12. An adsorbent body made according to the process of any preceding claim, wherein the adsorbent material comprises a metal-organic framework (MOF) and the adsorbent body comprises:
(a) at least 50wt% metal-organic framework (MOF) particles; and
(b) from 5.0wt% to 25wt% organic polymeric binder,
wherein the adsorbent body has:
(i) an envelope density of greater than 0.3g/cm³ as measured by the method for measuring the envelope density of an adsorbent body by mercury porosimetry as described herein;
(ii) a relative density of from greater than 0.3 to less than 1.2 as measured by the method for measuring relative density described herein wherein the relative density refers to the ratio of the envelope density of a crystalline adsorbent body, measured by mercury porosimetry, compared to the crystal density of the adsorbent material;
(iii) a BET area of greater than 100 m²/g as measured by the method for measuring the BET area of an adsorbent body described herein;
(iv) a micro-porosity of greater than 40% of the total pore volume as measured by the method of measuring micro-porosity by N₂ adsorption described herein; and
(v) a macro-porosity of less than 15% as measured by the method of measuring macroporosity by mercury porosimetry described herein.

13. The use of an adsorbent body according to claim 12 for gas storage, preferably carbon dioxide or hydrogen storage.

## Patentansprüche

1. Verfahren zum Herstellen eines Adsorptionskörpers, wobei das Verfahren die folgenden Schritte umfasst:
(a) Kontaktieren von Adsorptionsmaterial mit einer Ausgangsmischung, um eine solvatisierte Adsorptionsmischung in einem ersten Lösungsmittel zu bilden, wobei das Adsorptionsmaterial ausgewählt ist aus metallorganischen Gerüsten, kovalenten organischen Gerüsten, Zeolithen, Aktivkohle, organischen Käfigen und einer beliebigen Kombination davon, und wobei die Ausgangsmischung polymeres organisches Bindemittel und ein erstes Lösungsmittel umfasst, wobei die solvatisierte Adsorptionsmischung Adsorptionsmaterial, polymeres organisches Bindemittel und erstes Lösungsmittel umfasst, wobei das polymere organische Bindemittel an der Oberfläche des Adsorptionsmaterials adsorbiert ist und wobei das erste Lösungsmittel in der gesamten solvatisierten Adsorptionsmischung verteilt ist;
(b) Entfernen von zumindest etwas des ersten Lösungsmittels aus der solvatisierten Adsorptionsmischung in dem ersten Lösungsmittel, um einen Ausgangsadsorptionskörper zu bilden;
(c) Kontaktieren des Ausgangsadsorptionskörpers mit einem zweiten Lösungsmittel, um einen Adsorptionskörper mit reduziertem Bindemittel zu bilden, wobei während Schritt (c) von zumindest 20 Gew.-% bis 80 Gew.-% des polymeren organischen Bindemittels aus dem Anfangsadsorptionskörper entfernt werden, wie gemessen durch den Vorgang zum Bestimmen des Niveaus an Bindemittel in einem Adsorptionskörper, das hierin beschrieben ist, und in dem zweiten Lösungsmittel gelöst wird, wobei der Adsorptionskörper mit reduziertem Bindemittel Adsorptionsmaterial, polymeres organisches Bindemittel, zweites Lösungsmittel und restliches erstes Lösungsmittel umfasst, wobei das polymere organische Bindemittel an der Oberfläche des Adsorptionsmaterials adsorbiert ist und wobei das zweite Lösungsmittel in dem gesamten Adsorptionskörper mit reduziertem Bindemittel verteilt ist; und
(d) Lösungsmitteltrocknen des Adsorptionskörpers mit reduziertem Bindemittel, um den Adsorptionskörper zu bilden,
wobei die Löslichkeit des polymeren organischen Bindemittels in dem ersten Lösungsmittel die gleiche oder höher als die Löslichkeit des polymeren organischen Bindemittels in dem zweiten Lösungsmittel ist.

2. Verfahren nach Anspruch 1, wobei die Löslichkeit des polymeren organischen Bindemittels in dem ersten Lösungsmittel höher als die Löslichkeit des polymeren organischen Bindemittels in dem zweiten Lösungsmittel ist.

3. Verfahren nach einem vorhergehenden Anspruch, wobei das Adsorptionsmaterial ein metallorganischer Gerüstkörper in Partikelform ist und wobei das Gewichtsverhältnis von Adsorptionsmaterial zu polymerem organischem Bindemittel, das in der solvatisierten Adsorptionsmischung vorhanden ist, in der Spanne von 1:1 bis 9:1 ist.

4. Verfahren nach einem vorhergehenden Anspruch, wobei das Gewichtsverhältnis von Adsorptionsmaterial zu polymerem organischem Bindemittel, das in dem Adsorptionskörper vorhanden ist, größer als 3:1 ist.

5. Verfahren nach einem vorhergehenden Anspruch, wobei Schritt (b) einen Lösungsmitteltrocknungsschritt oder einen Zentrifugations- und/oder Filtrationsschritt gefolgt von einem Lösungsmitteltrocknungsschritt umfasst, wobei optional der Lösungsmitteltrocknungsschritt in Schritt (b) ausgewählt ist aus:
(i) einem Niedrigtemperaturtrocknungsschritt, wobei der Trocknungsschritt bei einer Temperatur von weniger als 50 °C für einen Zeitraum länger als 5 Stunden und bei Druck von 0,5 bis 1,0 bar durchgeführt wird und wobei das erste Lösungsmittel einen Siedepunkt von 100 °C oder weniger aufweist;
(ii) einem überkritischen Trocknungsschritt;
(iii) einem Gefriertrocknungsschritt;
(iv) Trocknen bei einer Temperatur von mehr als 50 °C bis weniger als 200 °C, und wobei das erste Lösungsmittel einen Siedepunkt von mehr als 100 °C aufweist; und
(v) Trocknen bei Temperaturen von mehr als 50 °C, und wobei die gasförmige Konzentration des ersten Lösungsmittels, das in dem Kopfraum über der solvatisierten Adsorptionsmischung entfernt wird, bei zwischen 60 % und 95 % seines Sättigungswertes bei der gegebenen Trocknungstemperatur zumindest 1 Stunde lang gehalten wird.

6. Verfahren nach einem vorhergehenden Anspruch, wobei während Schritt (c) der Ausgangsadsorptionskörper für einen Zeitraum von mehr als zehn Stunden in Kontakt mit dem zweiten Lösungsmittel ist.

7. Verfahren nach einem vorhergehenden Anspruch, wobei das Adsorptionsmaterial ein Körper aus metallorganischem Gerüst (MOF) ist, ausgewählt aus:
(i) Zr-haltigen MOFs;
(ii) Zn-haltigen MOFs wie Zeolith-Imidazolat-Gerüsten und Zn-haltigem UTSA-16, CALF-15, CALF-20, ZnNi(NA);
(iii) MOF-74 und Derivaten davon;
(iv) Al-basierten MOFs;
(v) Fe-basierten MOFs;
(vi) MOFs der M(F₆₋ₓ)Lₓ-Familie;
(vii) Cu-basierten MOFs;
(viii) Co-basierten MOFs;
(ix) Cr-basierten MOFs;
(x) Nb-basierten MOFs wie NbOFFIVE;
(xi) Ni-basierten MOFs;
(xii) Mn-basierten MOFs;
(xiii) Mischmetall-MOFs; und
(xiv) einer beliebigen Kombination davon.

8. Verfahren nach einem vorhergehenden Anspruch, wobei das polymere organische Bindemittel ausgewählt ist aus Polyvinylalkohol (PVA), Polyvinylacetat, Polyethylenimin, Polyimid (PI), Polyvinylpyrrolidon, Polyvinylformal, Polyacrylsäure, Natriumpolyacrylat, Polyethylenglykol, Polypropylenglykol, Poly(1,4-phenylenetherethersulfon) (PFEES), Poly(dimethylsiloxan) (PDMS), Poly(tetrahydrofuran) (PTHF), Polyolefin, Polyamid, Chitosan, Celluloseacetat, Hydroxypropylmethylcellulose (HPMC), Methylcellulose, Hydroxypropylmethylcellulosephthalat (HPMCP) und einer beliebigen Kombination davon.

9. Verfahren nach einem vorhergehenden Anspruch, wobei das zweite Lösungsmittel ausgewählt ist aus Alkoholen und Glykolen und wobei das zweite Lösungsmittel ein Molekulargewicht von weniger als 600 Da aufweist.

10. Verfahren nach einem vorhergehenden Anspruch, wobei der Adsorptionskörper ein Material umfasst, ausgewählt aus:
(a) Nanopartikeln aus Metallen und Metallsalzen;
(b) Enzymen;
(c) magnetischen Materialien;
(d) Farbstoffen und Pigmenten;
(e) Graphen und Graphenoxid; und
(f) einer beliebigen Kombination davon.

11. Verfahren nach einem vorhergehenden Anspruch, wobei das Adsorptionsmaterial ausgewählt ist aus Al- oder Zr-Fumarat und das polymere organische Bindemittel ausgewählt ist aus Polyvinylalkohol, Methylcellulose oder Polyimid.

12. Adsorptionskörper, hergestellt gemäß dem Verfahren nach einem vorhergehenden Anspruch, wobei das Adsorptionsmaterial ein metallorganisches Gerüst (MOF) umfasst und der Adsorptionskörper Folgendes umfasst:
(a) zumindest 50 Gew.-% Partikel aus metallorganischem Gerüst (MOF); und
(b) von 5,0 Gew.-% bis 25 Gew.-% organisches polymeres Bindemittel,
wobei der Adsorptionskörper Folgendes aufweist:
(i) eine Hülldichte von mehr als 0,3 g/cm³ wie gemessen durch den Vorgang zum Messen der Hülldichte eines Adsorptionskörpers durch Quecksilberporosimetrie wie hierin beschrieben;
(ii) eine relative Dichte von mehr als 0,3 bis weniger als 1,2 wie gemessen durch den hierin beschriebenen Vorgang zum Messen von relativer Dichte, wobei sich die relative Dichte auf das Verhältnis der Hülldichte eines kristallinen Adsorptionskörpers, gemessen durch Quecksilberporosimetrie, verglichen mit der Kristalldichte des Adsorptionsmaterials bezieht;
(iii) eine BET-Fläche von mehr als 100 m²/g wie gemessen durch den hierin beschriebenen Vorgang zum Messen der BET-Fläche eines Adsorptionskörpers;
(iv) eine Mikroporosität von mehr als 40 % des gesamten Porenvolumens wie gemessen durch den hierin beschriebenen Vorgang zum Messen von Mikroporosität durch N₂-Adsorption; und
(v) eine Makroporosität von weniger als 15 % wie gemessen durch den hierin beschriebenen Vorgang zum Messen von Makroporosität durch Quecksilberporosimetrie.

13. Verwendung eines Adsorptionskörpers nach Anspruch 12 zur Gasspeicherung, bevorzugt Kohlendioxid- oder Wasserstoffspeicherung.

## Revendications

1. Procédé de fabrication d'un corps adsorbant, dans lequel le procédé comprend les étapes de :
(a) mise en contact d'un matériau adsorbant avec un mélange initial pour former un mélange adsorbant solvaté dans un premier solvant, dans lequel le matériau adsorbant est choisi parmi des structures organométalliques, des structures organo-covalentes, des zéolites, du charbon actif, des cages organiques, et toute combinaison de ceux-ci, et dans lequel le mélange initial comprend un liant organique polymère et un premier solvant, dans lequel le mélange adsorbant solvaté comprend un matériau adsorbant, un liant organique polymère et un premier solvant, dans lequel le liant organique polymère est adsorbé sur la surface du matériau adsorbant et dans lequel le premier solvant est réparti dans tout le mélange adsorbant solvaté ;
(b) élimination d'au moins une partie du premier solvant du mélange adsorbant solvaté dans le premier solvant pour former un corps adsorbant initial ;
(c) mise en contact du corps adsorbant initial avec un second solvant pour former un corps adsorbant à liant réduit, dans lequel au cours de l'étape (c) entre au moins 20 % en poids et 80 % en poids du liant organique polymère est éliminé du corps adsorbant initial, tel que mesuré par le procédé de détermination du niveau de liant dans un corps adsorbant décrit ici, et est dissous dans le second solvant, dans lequel le corps adsorbant à liant réduit comprend un matériau adsorbant, un liant organique polymère, un second solvant et un premier solvant résiduel, dans lequel le liant organique polymère est adsorbé sur la surface du matériau adsorbant et dans lequel le second solvant est réparti dans tout le corps adsorbant à liant réduit ; et
(d) séchage au solvant du corps adsorbant à liant réduit pour former le corps adsorbant,
dans lequel la solubilité du liant organique polymère dans le premier solvant est identique ou supérieure à la solubilité du liant organique polymère dans le second solvant.

2. Procédé selon la revendication 1, dans lequel la solubilité du liant organique polymère dans le premier solvant est supérieure à la solubilité du liant organique polymère dans le second solvant.

3. Procédé selon l'une quelconque des revendications précédentes, dans lequel le matériau adsorbant est un corps de structure organométallique sous forme particulaire, et dans lequel le rapport pondéral du matériau adsorbant au liant organique polymère présent dans le mélange adsorbant solvaté est compris dans la plage de 1:1 à 9:1.

4. Procédé selon l'une quelconque des revendications précédentes, dans lequel le rapport pondéral de matériau adsorbant au liant organique polymère présent dans le corps adsorbant est supérieur à 3:1.

5. Procédé selon l'une quelconque des revendications précédentes, dans lequel l'étape (b) comprend une étape de séchage au solvant ou une étape de centrifugation et/ou de filtration suivie d'une étape de séchage au solvant, éventuellement dans lequel l'étape de séchage au solvant dans l'étape (b) est choisie parmi :
(i) une étape de séchage à basse température dans laquelle l'étape de séchage est effectuée à une température inférieure à 50° C, pendant une durée plus longue que 5 heures, et à une pression de 0,5 à 1,0 bar, et dans lequel le premier solvant a un point d'ébullition de 100° C ou moins ;
(ii) une étape de séchage supercritique ;
(iii) une étape de lyophilisation ;
(iv) séchage à une température comprise entre plus de 50° C et moins de 200° C, et dans lequel le premier solvant a un point d'ébullition supérieur à 100° C ; et
(v) séchage à des températures supérieures à 50° C et dans lequel la concentration gazeuse du premier solvant éliminé dans l'espace de tête au-dessus du mélange adsorbant solvaté est maintenue entre 60 % et 95 % de sa valeur de saturation à la température de séchage donnée pendant au moins 1 heure.

6. Procédé selon l'une quelconque des revendications précédentes, dans lequel au cours de l'étape (c) le corps adsorbant initial est en contact avec le second solvant pendant une durée supérieure à dix heures.

7. Procédé selon l'une quelconque des revendications précédentes, dans lequel le matériau adsorbant est un corps de structure organométallique (MOF) choisi parmi :
(i) les MOF contenant du Zr ;
(ii) les MOF contenant du Zn tels que les structures d'imidazolate de zéolite et contenant du Zn UTSA-16, CALF-15, CALF-20, ZnNi(NA) ;
(iii) MOF-74 et ses dérivés ;
(iv) les MOF à base d'Al ;
(v) les MOF à base de Fe ;
(vi) les MOF de la famille M(F₆₋ₓ)Lₓ ;
(vii) les MOF à base de Cu ;
(viii) les MOF à base de Co ;
(ix) les MOF à base de Cr ;
(x) les MOF à base de Nb tels que NbOFFIVE ;
(xi) les MOF à base de Ni ;
(xii) les MOF à base de Mn ;
(xiii) les MOF à métal mixte ; et
(xiv) toute combinaison de ceux-ci.

8. Procédé selon l'une quelconque des revendications précédentes, dans lequel le liant organique polymère est choisi parmi l'alcool polyvinylique (PVA), l'acétate de polyvinyle, la polyéthylèneimine, le polyimide (PI), la polyvinylpyrrolidone, le polyvinylformal, l'acide polyacrylique, le polyacrylate de sodium, le polyéthylèneglycol, le polypropylèneglycol, le poly(1,4-phénylène-éther-éther-sulfone) (PFEES), le poly(diméthylsiloxane) (PDMS), le poly(tétrahydrofurane) (PTHF), la polyoléfine, le polyamide, le chitosane, l'acétate de cellulose, l'hydroxypropylméthylcellulose (HPMC), la méthylcellulose, le phtalate d'hydroxypropylméthylcellulose (HPMCP) et toute combinaison de ceux-ci.

9. Procédé selon l'une quelconque des revendications précédentes, dans lequel le second solvant est choisi parmi les alcools et les glycols, et dans lequel le second solvant présente un poids moléculaire inférieur à 600 Da.

10. Procédé selon l'une quelconque des revendications précédentes, dans lequel le corps adsorbant comprend un matériau choisi parmi :
(a) les nanoparticules de métaux et de sels métalliques ;
(b) les enzymes ;
(c) les matériaux magnétiques ;
(d) les colorants et pigments ;
(e) le graphène et l'oxyde de graphène ; et
(f) toute combinaison de ceux-ci.

11. Procédé selon l'une quelconque des revendications précédentes, dans lequel le matériau adsorbant est choisi parmi le fumarate d'Al ou de Zr et le liant organique polymère est choisi parmi l'alcool polyvinylique, la méthylcellulose ou le polyimide.

12. Corps adsorbant fabriqué selon le procédé de l'une quelconque des revendications précédentes, dans lequel le matériau adsorbant comprend une structure organométallique (MOF) et le corps adsorbant comprend :
(a) au moins 50 % en poids de particules de structure organométallique (MOF) ; et
(b) de 5,0 % en poids à 25 % en poids de liant polymère organique,
dans lequel le corps adsorbant a :
(i) une densité d'enveloppe supérieure à 0,3 g/cm³ telle que mesurée par le procédé de mesure de la densité d'enveloppe d'un corps adsorbant par porosimétrie au mercure tel que décrit ici ;
(ii) une densité relative de plus de 0,3 à moins de 1,2 telle que mesurée par le procédé de mesure de la densité relative décrite ici, dans laquelle la densité relative se réfère au rapport de la densité d'enveloppe d'un corps adsorbant cristallin, mesurée par porosimétrie au mercure, par rapport à la densité cristalline du matériau adsorbant ;
(iii) une surface BET supérieure à 100 m²/g telle que mesurée par le procédé de mesure de la surface BET d'un corps adsorbant décrit ici ;
(iv) une microporosité supérieure à 40 % du volume poreux total telle que mesurée par le procédé de mesure de la microporosité par adsorption de N₂ décrit ici ; et
(v) une macroporosité inférieure à 15 % telle que mesurée par le procédé de mesure de la macroporosité par porosimétrie au mercure décrit ici.

13. Utilisation d'un corps adsorbant selon la revendication 12 pour le stockage de gaz, de préférence le stockage de dioxyde de carbone ou d'hydrogène.
